(19) Europäisches Patentamt

European Patent Office

Office européen des brevets

(11) **EP 4 358 015 B1**

(12) **EUROPEAN PATENT SPECIFICATION**

(45) Date of publication and mention
of the grant of the patent:
**19.02.2025 Bulletin 2025/08**

(21) Application number: **22201999.4**

(22) Date of filing: **17.10.2022**

(51) International Patent Classification (IPC):
**G06T 11/00** (2006.01)    **G06T 5/70** (2024.01)
**G06T 5/60** (2024.01)    **G06N 3/045** (2023.01)
**G06N 3/0464** (2023.01)    **G06N 3/0475** (2023.01)
**G06N 3/088** (2023.01)    **G06N 3/096** (2023.01)

(52) Cooperative Patent Classification (CPC):
**G06T 11/00; G06N 3/045; G06N 3/0464;
G06N 3/0475; G06N 3/088; G06N 3/096;
G06T 5/60; G06T 5/70;** G06T 2207/20081;
G06T 2207/20084

(54) **METHOD OF AND APPARATUS FOR PROCESSING DIGITAL IMAGE DATA**

VERFAHREN UND VORRICHTUNG ZUR VERARBEITUNG DIGITALER BILDDATEN

PROCÉDÉ ET APPAREIL DE TRAITEMENT DE DONNÉES D'IMAGE NUMÉRIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**24.04.2024 Bulletin 2024/17**

(73) Proprietor: **Robert Bosch GmbH
70442 Stuttgart (DE)**

(72) Inventors:
 • **Khoreva, Anna
  70197 Stuttgart (DE)**
 • **Li, Yumeng
  72070 Tuebingen (DE)**
 • **Zhang, Dan
  71229 Leonberg (DE)**

(56) References cited:
 **US-A1- 2022 277 431**

 • **ABDAL RAMEEN ET AL: "Image2StyleGAN: How
  to Embed Images Into the StyleGAN Latent
  Space?", 2019 IEEE/CVF INTERNATIONAL
  CONFERENCE ON COMPUTER VISION (ICCV),
  IEEE, 27 October 2019 (2019-10-27), pages 4431 -
  4440, XP033723130, DOI: 10.1109/
  ICCV.2019.00453**

 • **JONAS WULFF ET AL: "Improving Inversion and
  Generation Diversity in StyleGAN using a
  Gaussianized Latent Space", ARXIV.ORG,
  CORNELL UNIVERSITY LIBRARY, 201 OLIN
  LIBRARY CORNELL UNIVERSITY ITHACA, NY
  14853, 14 September 2020 (2020-09-14),
  XP081762639**

 • **KONPAT PREECHAKUL ET AL: "Diffusion
  Autoencoders: Toward a Meaningful and
  Decodable Representation", ARXIV.ORG,
  CORNELL UNIVERSITY LIBRARY, 201 OLIN
  LIBRARY CORNELL UNIVERSITY ITHACA, NY
  14853, 30 November 2021 (2021-11-30),
  XP091106176**

 • **ZHANG WENXIANG ET AL: "Radar HRRP Data
  Augmentation Using CVAE with Extended Latent
  Space Distribution", 2021 IEEE 4TH ADVANCED
  INFORMATION MANAGEMENT,
  COMMUNICATES, ELECTRONIC AND
  AUTOMATION CONTROL CONFERENCE
  (IMCEC), IEEE, vol. 4, 18 June 2021 (2021-06-18),
  pages 1346 - 1354, XP033942914, DOI: 10.1109/
  IMCEC51613.2021.9482276**

# EP 4 358 015 B1

**Description**

Technical Field

The disclosure relates to a method of processing digital image data.

The disclosure further relates to an apparatus for processing digial image data.

Generative adversarial networks, GAN, are known and characterize an approach of generative modeling which can e.g. be used to generate image data.

US 2022/277431 A1, Tensmeyer et al. describes a methods for learning or identifying a learned-initialization-latent vector for an initialization digital image utilizing a high number (e.g., thousands) of learning iterations on an image-generating-neural network (e.g., a GAN) and reconstruct a target digital image using an image-generating-neural network based on a modified version of the learned-initialization-latent vector.

Abadal Rameen et al.: "Image2StyleGAN: How to Embed Images Into the StyleGAN Latent Space?", 2019 IEEE/CVF International Conference on Computer Vision (ICCV), IEEE, 27 October 2019, pages 4431-4440 describes an efficient algorithm to embed a given image into the latent space of StyleGAN. This embedding enables semantic image editing operations to be be applied to existing photographs, e.g. for image morphing, style transfer, and expression transfer.

Jonas Wulff et al.: "Improving Inversion and Generation Diversity in StyleGAN using a Gaussianized Latent Space", ARXIV.ORG, Cornell University Library, 201 OLIN Library Cornell University Ithaca, NY 14853, 14 September 2020 describes a scheme to explicitly model the data distribution in latent space, in paricular that, under a simple nonlinear operation, the data distribution can be modeled as Gaussian and therefore expressed using sufficient statistics. This yields a simple Gaussian prior, which is used to regularize the projection of images into the latent space.The resulting projections lie in smoother and better behaved regions of the latent space, as shown using interpolation performance for both real and generated images. Furthermore, the Gaussian model of the distribution in latent space allows for the reduction of artifacts in the generator output while maintaining diversity of the generated images.

Konpat Preechakul et al.: "Diffusion Autoencoders: Toward a Meaningful and Decodable Representation", ARXIV.ORG, Cornell University Library, 201 OLIN Library Cornell University Ithaca, NY 14853, 30 November 2021 describes the use of diffusion probabilistic models (DPM) for representation learning and for extracting a meaningful and decodable representation of an input image via autoencoding. A learnable encoder is used for discovering the high-level semantics, and a DPM as the decoder for modeling the remaining stochastic variations.

Zhang Wenxiang et al.: "Radar HRRP Data Augmentation Using CVAE with Extended Latent Space Distribution", 2021 IEEE 4th Advanced Information Management, Communicates, Electronic and Automation Control Conference (IMCEC), IEEE, vol. 4, 18 June 2021, pages 1346-1354 describes a variational autoencoder (VAE) based generative model with particular regard to the aspect angle sensitivity of the radar high-resolution range profile (HRRP) data of maritime vessels, and conduct HRRP data augmentation experiments to improve the recognition performance.

Summary

Exemplary embodiments relate to a method, for example a computer-implemented method, of processing digital image data, comprising: determining, by an encoder configured to map a first digital image to an extended latent space associated with a generator of a generative adversarial network, GAN, system, a noise prediction associated with the first digital image, determining, by the generator of the GAN system, at least one further digital image based on the noise prediction associated with the first digital image and a plurality of latent variables associated with the extended latent space. In some exemplary embodiments, this may enable to determine, e.g. generate, further digital images comprising a similar or identical content as the first digital image, but, optionally, with a modified style, as e.g. characterized by at least some of the plurality of latent variables.

In some exemplary embodiments, the digital image data and/or the (first) digital image may comprise at least one of, but is not limited to: a) at least one digital image, b) an image or frame of a video stream, c) data associated with a RADAR system, e.g. imaging RADAR system, e.g. RADAR image, c) data associated with a LIDAR system, e.g. LIDAR image, d) an ultrasonic image, e) a motion image, f) a thermal image, e.g. as obtained from a thermal imaging system.

In some exemplary embodiments, at least some of the plurality of latent variables associated with the extended latent space characterize at least one of the following aspects of the first digital image: a) a style, e.g. a non-semantic appearance, b) a texture, c) a color. In some exemplary embodiments, a style of a digital image may be characterized by a combination of a texture of at least some parts of the digital image and a color of at least some parts of the digital image.

In some exemplary embodiments, the method comprises determining the plurality of latent variables based on at least one of: a) a second digital image, which is different from the first digital image, e.g. using the encoder, b) a plurality of probability distributions, as may e.g. be obtained based on a data set in some exemplary embodiments.

In some exemplary embodiments, the method comprises at least one of: a) determining a plurality of, for example

2

hierarchical, feature maps based on the first digital image, b) determining a plurality of latent variables associated with the extended latent space for the first digital image based on the plurality of, for example hierarchical, feature maps, c) determining a, for example additive, noise map based on at least one of the plurality of, for example hierarchical, feature maps.

In some exemplary embodiments, the method comprises: randomly and/or pseudo-randomly masking at least a portion of the noise prediction associated with the first digital image. Note that according to further exemplary embodiments, the masking is not required for modifying a style, e.g. for style augmentation, according to the principle according to the embodiments.

In some exemplary embodiments, the method comprises: masking of the noise map, e.g. in a random and/or pseudo-random fashion.

In some exemplary embodiments, the method comprises: dividing, e.g. spatially dividing, the noise map into a plurality of, e.g. P x P many, e.g. non-overlapping, patches, selecting, in a random and/or pseudo-random fashion, a subset of the patches, replacing the subset of the patches by patches of, e.g. unit Gaussian, random variables, e.g. of the same size.

In some exemplary embodiments, the method comprises: combining the noise prediction associated with the first digital image with a style prediction of a or the second digital image, generating a further digital image using the generator based on the combined noise prediction associated with the first digital image and the style prediction of the second digital image. In some exemplary embodiments, this enables to provide the further digital image with the style, or, for example, with at least some aspects of the style, of the second digital image, and, e.g., with the content of the first digital image.

In some exemplary embodiments, the method comprises: providing the noise prediction associated with the first digital image, providing different sets of latent variables characterizing different styles to be applied to a, for example semantic, content of the first digital image, generating a plurality of digital images with the different styles using the generator based on the noise prediction associated with the first digital image and the different sets of latent variables characterizing the different styles.

In some exemplary embodiments, the method comprises: providing image data, e.g. comprising one or more digital images, associated with a first domain, providing image data, e.g. comprising one or more digital images, associated with a second domain, applying a style of the second domain to the image data associated with the first domain.

In some exemplary embodiments, the image data associated with the first domain comprises labels, wherein, for example, the applying of the style of the second domain to the image data associated with the first domain comprises preserving the labels. This way, a style of the digital images of the first domain may be modified while at the same time preserving the labels, thus providing further labeled image data with different style(s).

In some exemplary embodiments, the method comprises: providing first image data having first content information, providing second image data, wherein for example the second image data comprises second content information different from the first content information, extracting style information of the second image data, applying at least a part of the style information of the second image data to the first image data.

In some exemplary embodiments, the method comprises: generating training data, e.g. for training at least one neural network and/or machine learning system, wherein the generating is e.g. based on image data of a source domain and based on modified image data of the source domain, wherein, for example, the modified image data is and/or has been modified with respect to an image style, e.g. according to the principle of the embodiments, for example based on a style of further image data, and, optionally, training the at least one neural network system based on the training data.

Further exemplary embodiments relate to an apparatus for performing the method according to the embodiments.

Further exemplary embodiments relate to a computer program comprising instructions which, when the program is executed by a computer, cause the computer to carry out the method according to the embodiments.

Further exemplary embodiments relate to a computer-readable storage medium comprising instructions which, when executed by a computer, cause the computer to carry out the method according to the embodiments.

Further exemplary embodiments relate to a data carrier signal carrying and/or characterizing the computer program according to the embodiments.

Further exemplary embodiments relate to a use of the method according to the embodiments and/or of the apparatus according to the embodiments and/or of the computer program according to the embodiments and/or of the computer-readable storage medium according to the embodiments and/or of the data carrier signal according to the embodiments for at least one of: a) determining at least one further digital image based on the noise prediction associated with the first digital image and a plurality of latent variables associated with the extended latent space, at least some of the plurality of latent variables being associated with another image and/or other data than the first digital image, b) transferring a style from a second digital image to the first digital image, e.g. while preserving a content of the first digital image, c) disentangling style and content of at least one digital image, d) creating different stylized digital images with unchanged content, e.g. based on the first digital image and a style of at least one further, e.g. second, digital image, e) using, e.g. re-using, labelled annotations for stylized images, f) avoiding annotation work when changing a style of at least one digital image, g) generating, e.g. perceptually realistic, digital images, e.g. with different styles, h) providing proxy validation set, e.g. for testing out-of-distribution generalization, e.g. of a neural network system, i) training a machine learning system, j) testing a machine learning system, k) verifying a machine learning system, l) validating a machine learning system, m) generating training data, e.g. for a machine learning system, n) data augmentation, e.g. of existing image data, o) improving a generalization performance of a machine learning system, p) manipulating, e.g. flexibly manipulate, image styles, e.g. without a training associated with multiple data sets, q) utilizing an encoder GAN pipeline to manipulate image styles, r) embedding, by the encoder, information associated with an image style into, for example intermediate, latent variables, s) mixing styles of digital images, e.g. for generating at least one further digital image comprising a style based on the mixing.

Some exemplary embodiments will now be described with reference to the accompanying drawings, in which:

Fig. 1       schematically depicts a simplified flow-chart according to exemplary embodiments,

Fig. 2       schematically depicts a simplified block diagram according to exemplary embodiments,

Fig. 3       schematically depicts a simplified flow-chart according to exemplary embodiments,

Fig. 4       schematically depicts a simplified flow-chart according to exemplary embodiments,

Fig. 5       schematically depicts a simplified block diagram according to exemplary embodiments,

Fig. 6A      schematically depicts a simplified block diagram according to exemplary embodiments,

Fig. 6B      schematically depicts a simplified block diagram according to exemplary embodiments,

Fig. 7       schematically depicts a simplified flow-chart according to exemplary embodiments,

Fig. 8       schematically depicts a simplified flow-chart according to exemplary embodiments,

Fig. 9       schematically depicts a simplified flow-chart according to exemplary embodiments,

Fig. 10      schematically depicts a simplified flow-chart according to exemplary embodiments,

Fig. 11      schematically depicts a simplified block diagram according to exemplary embodiments,

Fig. 12      schematically depicts a simplified block diagram according to exemplary embodiments,

Fig. 13      schematically depicts a simplified flow-chart according to exemplary embodiments,

Fig. 14      schematically depicts a simplified block diagram according to exemplary embodiments,

Fig. 15      schematically depicts a simplified flow-chart according to exemplary embodiments,

Fig. 16      schematically depicts a simplified flow-chart according to exemplary embodiments,

Fig. 17A     schematically depicts image data according to exemplary embodiments,

Fig. 17B     schematically depicts an optional, exemplary color version of Fig. 17A according to exemplary embodiments,

Fig. 18      schematically depicts image data according to exemplary embodiments,

Fig. 19      schematically depicts a simplified block diagram according to exemplary embodiments, and

Fig. 20      schematically depicts aspects of use according to exemplary embodiments.

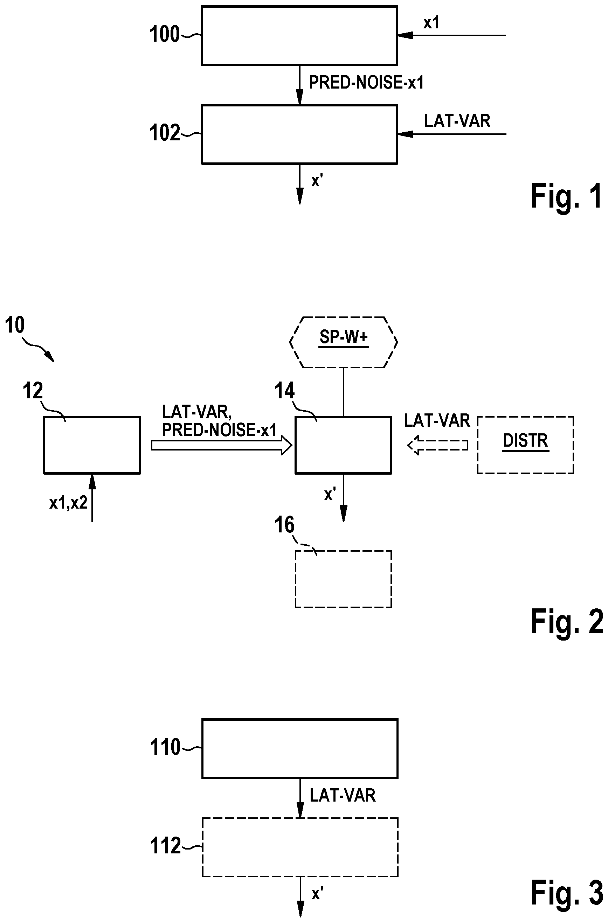

Exemplary embodiments, see, for example, Fig. 1, 2, relate to a method, for example a computer-implemented method, of processing digital image data, e.g. associate with at least one digital image, comprising: determining 100 (Fig.

1), by an encoder 12 (Fig. 2) configured to map a first digital image x1 to an extended latent space SP-W+ associated with a generator 14 of a generative adversarial network, GAN, system 10, a noise prediction PRED-NOISE-x1 associated with the first digital image x1, determining 102 (Fig. 1), by the generator 14 of the GAN system 10, at least one further digital image x' based on the noise prediction PRED-NOISE-x1 associated with the first digital image x1 and a plurality LAT-VAR of latent variables associated with the extended latent space SP-W+. In some exemplary embodiments, this may enable to determine, e.g. generate, further digital images x' comprising a similar or identical content as the first digital image x1, but, optionally, with a modified style, as e.g. characterized by at least some of the plurality of latent variables.

In some exemplary embodiments, the digital image data and/or the (first) digital image x1 may comprise at least one of, but is not limited to: a) at least one digital image, b) an image or frame of a video stream, c) data associated with a RADAR system, e.g. imaging RADAR system, e.g. RADAR image, c) data associated with a LIDAR system, e.g. LIDAR image, d) an ultrasonic image, e) a motion image, f) a thermal image, e.g. as obtained from a thermal imaging system.

In some exemplary embodiments, at least some of the plurality LAT-VAR of latent variables associated with the extended latent space SP-W+ characterize at least one of the following aspects of the first digital image: a) a style, e.g. a non-semantic appearance, b) a texture, c) a color. In some exemplary embodiments, a style of a digital image may be characterized by a combination of a texture of at least some parts of the digital image and a color of at least some parts of the digital image.

In some exemplary embodiments, Fig. 3, the method comprises: determining 110 the plurality LAT-VAR of latent variables, e.g. specific values of the plurality LAT-VAR of latent variables, based on at least one of: a) a second digital image x2 (Fig. 2), which is different from the first digital image x1, e.g. using the encoder 12 of the GAN system 10, b) a plurality of probability distributions DISTR, as may e.g. be obtained based on a data set (not shown) in some exemplary embodiments. The optional block 112 of Fig. 3 symbolizes using the plurality LAT-VAR of latent variables, e.g. the specific values of the plurality LAT-VAR of latent variables, e.g. for generating a the further digital image x', e.g. using the generator 14.

In some exemplary embodiments, the GAN system 10 may comprise an optional discriminator 16, which, in some further exemplary embodiments, may e.g. be used for training at least one component of the of the GAN system, as is known in the art.

Some exemplary embodiments may make use of aspects of GAN inversion, which is related to finding, e.g. determining, latent variables in a latent space of a, for example pretrained, GAN, e.g. the GAN system 10 of Fig. 2, which, in some exemplary embodiments, can e.g. be used by the GAN system 10 to, e.g. faithfully, reconstruct a given image.

In some exemplary embodiments, the generator 14 of the GAN system 10 is configured and/or trained to generate digital images, e.g. photorealistic digital images, from latent variables, such as e.g. random (or pseudorandom) latent variables.

In some exemplary embodiments, the GAN system 10 of Fig. 2 may comprise a mapping network (not shown in Fig. 2) and may be configured to map a random latent vector, which may e.g. be denoted with $z \in \mathcal{Z}$, to intermediate "styles" latent variables, e.g., $w \in \mathcal{W}$, which in some exemplary embodiments may be used, e.g. to modulate features, e.g. at different resolution blocks.

In some exemplary embodiments, e.g. in addition to "styles", spatial stochastic noise that is e.g. randomly sampled, e.g. from a Gaussian distribution, may be added, e.g. after at least one, e.g. some, e.g. each, feature modulation(s). In some exemplary embodiments, the encoder 12 (Fig. 2) is configured, e.g. trained, to predict spatial noises, e.g. along with "style" latents in the extended latent space SP-W+ (" $\mathcal{W}^+$ space"), which, in some exemplary embodiments, can be considered as an extension of the latent space W.

In some exemplary embodiments, in the $\mathcal{W}^+$ space, "styles" at different layers may e.g. be different. In some exemplary embodiments, a, for example properly, trained encoder 12, e.g. trained by randomly masking out noise according to some exemplary embodiments, can disentangle texture and structure information, e.g. in an unsupervised way. More specifically, in some exemplary embodiments, the encoder 12 will encode texture information into "style" latents (latent variables) and content information into noise(s). Note, however, that according to further exemplary embodiments, the masking is not (necessarily) required for modifying a style, e.g. for style augmentation, according to the principle according to the embodiments. In other words, in some exemplary embodiments, style mixing, e.g. style augmentation, can e.g. be performed without masking.

In some exemplary embodiments, e.g. given a pretrained generator G (such as e.g. generator 12 of Fig. 2) of one GAN model, e.g. GAN system 10, which e.g. learns the mapping: $\mathcal{Z} \to X$, GAN inversion aims to map a given, e.g. digital, image x back to its latent representation z. Formally, it can be described as follows:

$$z^* = \arg \min_{z} d(G(z), x)$$

where $d(\cdot)$ is a distance metric, e.g. to measure a similarity between the original image x and reconstructed image G(z).

In some exemplary embodiments, L2 and LPIPS (as e.g. defined by arXiv:1801.03924v2 [cs.CV] 10 Apr 2018) can be jointly used as the distance metric $d(\cdot)$.

In some exemplary embodiments, the extended (intermediate) latent space $\mathcal{W}+$ encourages a comparatively good reconstruction quality. In some exemplary embodiments, e.g. in addition to intermediate latents prediction, spatial noises may be predicted as well, which, in some exemplary embodiments, can e.g. better preserve detail information in a given image. In some exemplary embodiments, formally, the Encoder E and Generator G can be described as follows:

$$\{w, \varepsilon\} = E(x),$$

$$x^* = G(w, \varepsilon),$$

wherin x and x* are the given original image and the reconstructed image, respectively, wherein $w$ characterizes predicted intermediate latent variables, and wherein $\varepsilon$ characterizes predicted noises. In some exemplary embodiments, the encoder may e.g. be trained to, e.g. faithfully, reconstruct the given image x.

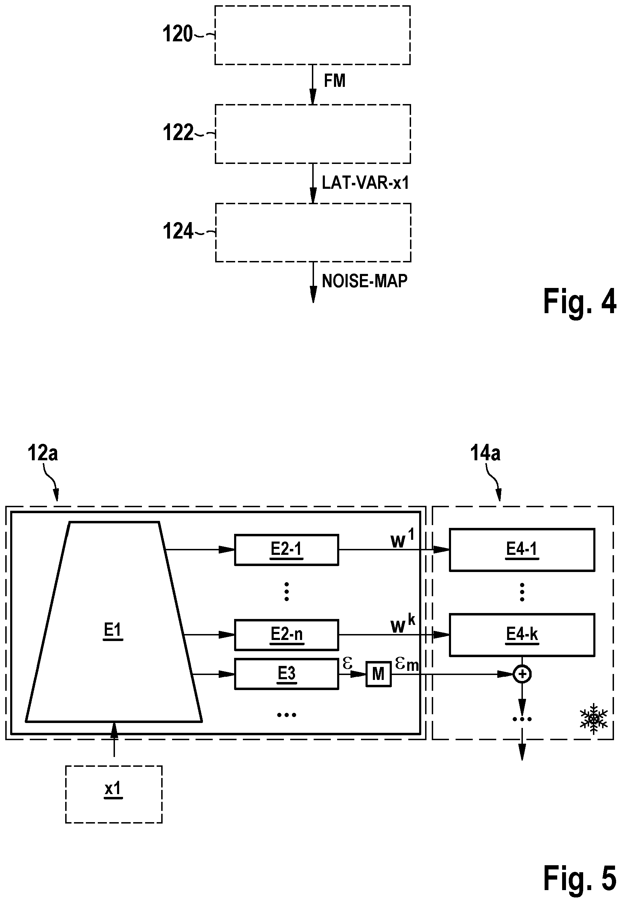

In some exemplary embodiments, Fig. 4, the method comprises at least one of: a) determining 120 a plurality of, for example hierarchical, feature maps FM based on the first digital image x1, b) determining 122 (Fig. 4) a plurality of latent variables LAT-VAR-x1 (e.g., values of the plurality of latent variables LAT-VAR-x1) associated with the extended latent space SP-W+ (Fig. 2) for the first digital image x1 based on the plurality of, for example hierarchical, feature maps FM, c) determining 124 a, for example additive, noise map NOISE-MAP based on at least one of the plurality of, for example hierarchical, feature maps FM.

Fig. 5 schematically depicts aspects of the GAN system 10 (Fig. 2) according to some exemplary embodiments. Element 12a symbolizes an encoder, e.g. similar to encoder 12 of Fig. 2. In some exemplary embodiments, encoder 12 of Fig. 2 may comprise the configuration of encoder 12a of Fig. 5. Element 14a symbolizes a generator, e.g. similar to generator 14 of Fig. 2. In some exemplary embodiments, generator 14 of Fig. 2 may comprise the configuration of generator 14a of Fig. 5. Element 14a symbolizes a generator, e.g. similar to generator 14 of Fig. 2.

Element E1 symbolizes a feature pyramid according to some exemplary embodiments, which is e.g. configured to perform the step of determining 120 a plurality of, for example hierarchical, feature maps FM based on the first digital image x1, see block 120 of Fig. 4. In other words, in some exemplary embodiments, the feature pyramid E1 is configured to operate as a feature extractor.

In some exemplary embodiments, the feature pyramid E1 may e.g. comprise a plurality of convolution layers for providing the plurality of, for example hierarchical, feature maps FM.

In some exemplary embodiments, the feature pyramid E1 may e.g. be based on, e.g. be similar or identical to, the structure depicted by Fig. 3 of arXiv:1612.03144v2 [cs.CV] 19 Apr 2017 ("Feature Pyramid Networks for Object Detection").

In some exemplary embodiments, other topologies for the feature pyramid E1 are also possible.

Elements E2-1, ..., E2-n, ... of Fig. 5 symbolize blocks configured to determine, e.g. similar or identical to block 122 of Fig. 4, a plurality of (presently k many) latent variables $w^1$, ..., $w^k$. In some exemplary embodiments the various blocks E2-1, ..., E2-n, ... receive feature maps FM of different hierarchy level and provide the latent variables $w^1$, ..., $w^k$, e.g. values of the latent variables $w^1$, ..., $w^k$, based thereon, e.g. for output to the generator 14a. In other words, in some exemplary embodiments, the multi-scale features of the feature pyramid E1 are respectively mapped by the blocks E2-1, ..., E2-n to the latent vectors or codes $\{w^k\}$, e.g. at the corresponding scales of the generator 14a.

Element E3 of Fig. 5 symbolizes a noise mapper which is configured to receive at least one feature map from the feature pyramid E1 and to provide, based on the at least one feature map, the noise map $\varepsilon$, e.g. in accordance with block 124 of Fig. 4. In some exemplary embodiments, the noise mapper E3 is configured to predict the noise map $\varepsilon$ at an intermediate (e.g., other than highest or lowest) scale of the hierarchy of the feature pyramid E1.

In some exemplary embodiments, the noise mapper E3 may e.g. comprise a stack of, e.g. 1X1, convolution layers, which is configured to take a h x w x c feature map as an input and to output a h x w x c' feature map.

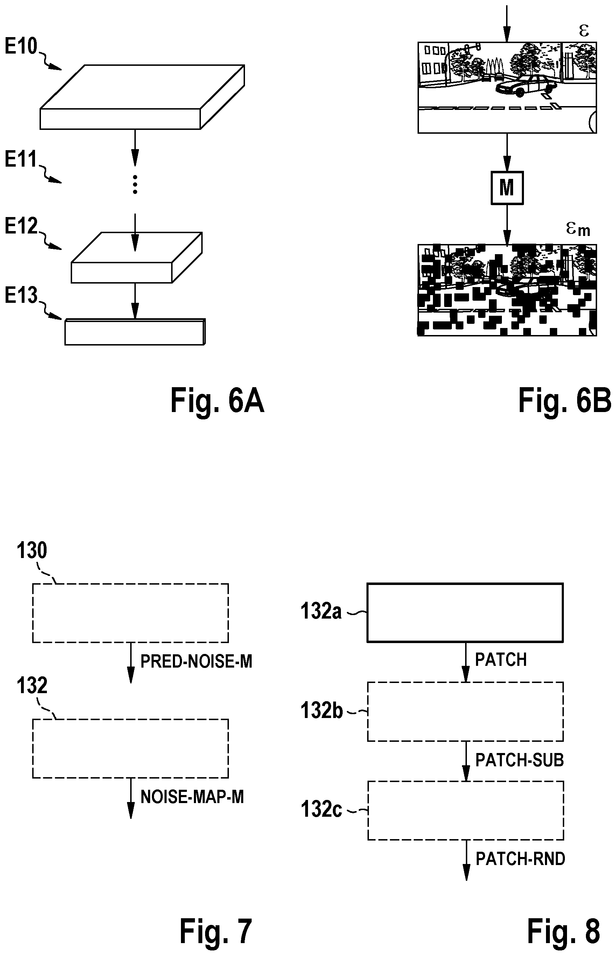

In some exemplary embodiments, Fig. 7, the method comprises: randomly and/or pseudo-randomly masking 130 at least a portion of the noise prediction NOISE-PRED associated with the first digital image x1, whereby a masked noise prediction NOISE-PRED-M is obtained.

In some exemplary embodiments, Fig. 7, the method comprises: masking 132 of the noise map $\varepsilon$ (Fig. 5), e.g. in a random and/or pseudo-random fashion, whereby a masked noise map NOISE-MAP-M is obtained, which is symbolized by element $\varepsilon_m$ of Fig. 5 at an output of the masking block M, which is e.g. configured to perform the masking according to at least one of the blocks 130, 132 of Fig. 7.

In some exemplary embodiments, Fig. 5, the masked noise map $\varepsilon_m$ is output to the generator 14a, e.g. similar to the latent variables $w^1$, ..., $w^k$, wherein the generator 14a is configured, e.g. trained, to output at least one digital image based on the latent variables $w^1$, ..., $w^k$ and the the masked noise map $\varepsilon_m$.

In some exemplary embodiments, the generator 14a of Fig. 5 may comprise one or more synthesis blocks E4-1, ..., E4-k and a combiner, e.g. adder (not individually referenced in Fig. 5) to generate an output digital image based on the latent variables $w^1$, ..., $w^k$ and the the masked noise map $\varepsilon_m$.

In some exemplary embodiments, the generator 14a may e.g. be of the StyleGAN-type or StyleGAN2-type, as e.g. disclosed in at least one of the following publications:

a) arXiv: 2008.00951v2 [cs.CV] 21 Apr 2021,
b) Tero Karras, Samuli Laine, Miika Aittala, Janne Hellsten, Jaakko Lehtinen, and Timo Aila. Analyzing and improving the image quality of stylegan. In CVPR, 2020 (also see arXiv:1912.04958v2).

As an example, in some exemplary embodiments, the generator 14a may comprise the architecture as exemplarily denoted by Fig. 2 (d) of publication b) mentioned above (also see arXiv:1912.04958v2).

Fig. 6A schematically depicts an exemplary structure of at least one of the blocks E2-1, ..., E2-n of Fig. 5. Element E10 symbolizes a feature map as exemplarily obtained at a certain hierarchy level by the feature pyramid E1, elements E11, E12 symbolize one or more elements, e.g. layers, of a neural network, e.g. of the convolutional neural network, CNN, -type, e.g. a fully connected CNN configured, e.g. trained, to provide a latent vector E13, in some cases e.g. also denoted as $w^i$, $i = 1$, ..., $k$, based on the feature map E10. In some exemplary embodiments, the latent vector is of the 1x1x512 type, e.g. a one-dimensional vector that comprises 512 components.

Fig. 6B schematically depicts a depiction of the noise map $\varepsilon$ of Fig. 5, e.g. as obtained by block E3, the masking block M configured to perform at least one of the masking techniques of blocks 130, 132 of Fig. 7, and an exemplary depiction of the masked noise map $\varepsilon_m$.

In some exemplary embodiments, Fig. 8, the method comprises: dividing 132a, e.g. spatially dividing, the noise map $\varepsilon$ into a plurality of, e.g. P x P many, e.g. non-overlapping, patches PATCH, selecting 132b, in a random and/or pseudo-random fashion, a subset PATCH-SUB of the patches PATCH, replacing 132c the subset PATCH-SUB of the patches PATCH by patches of, e.g. unit Gaussian, random variables PATCH-RND, e.g. of the same size. In other words, in some exemplary embodiments, some content of the noise map $\varepsilon$ is replaced by patches of, e.g. unit Gaussian, random variables.

In some exemplary embodiments, e.g. using the encoder 12, 12a of the GAN system 10, a style of a digital image x1 can be modified, e.g. by changing the intermediate latents w, which characterize aspects of the style of the digital image x1.

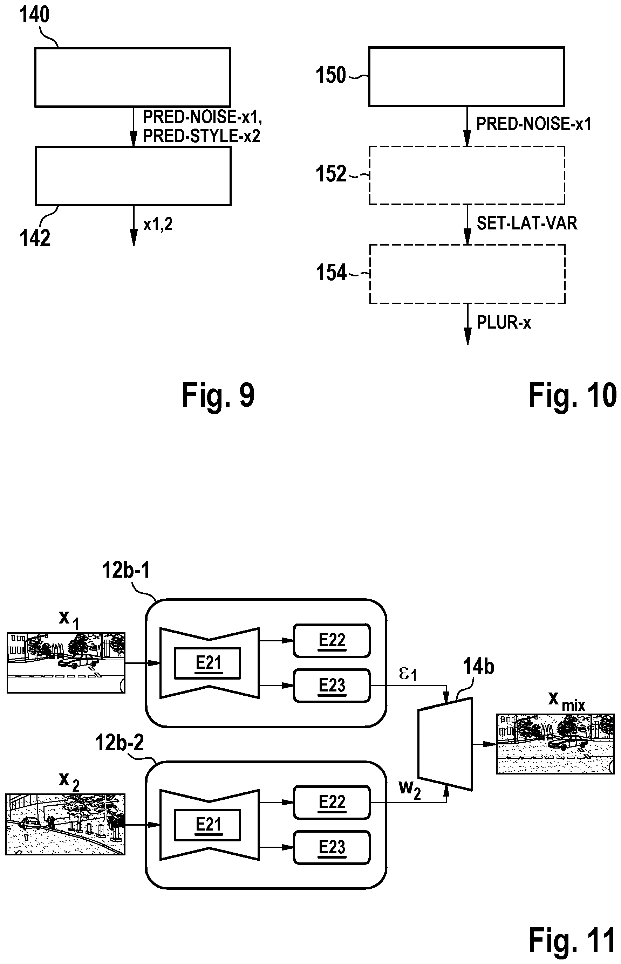

In this regard, Fig. 11 schematically depicts a block diagram according to further exemplary embodiments. Element $x_1$ symbolizes a first digital image that is provided to a first instance 12b-1 of an encoder, e.g. similar or identical to the encoder 12a of Fig. 5. Element $x_2$ symbolizes a second digital image that is provided to a second instance 12b-2 of the encoder, e.g. similar or identical to the encoder 12a of Fig. 5. Both instances 12b-1, 12b-2 may be provided based on the same encoder and may either be evaluated simultaneously and/or in a temporally partly overlapping or non-noverlapping (e.g., sequential) fashion.

Elements E21 of Fig. 11 symbolize blocks of the encoder configured to perform feature extraction, e.g. in the form of the feature pyramid E1 of Fig. 5.

Elements E22 symbolize blocks of the encoder which are configured to determine information characterizing a style of the respective input image $x_1$, $x_2$, e.g. characterized by latent variables w as explained above, see, for example, elements $w^1$, ..., $w^k$ of Fig. 5. In some exemplary embodiments, the blocks E22 of Fig. 11 may e.g. collectively denote the blocks E2-1, ..., E2-k of Fig. 5. As an example, block E22 of the encoder instance 12b-2 provides latent variables $w_2$ characterizing a style of the second digital image $x_2$.

Elements E23 of Fig. 11 symbolize blocks of the encoder which are configured to determine the noise map, e.g. similar or identical to block E3 of Fig. 5. As an example, block E23 of the encoder instance 12b-1 provides a noise map $\varepsilon_1$ based on the first digital image $x_1$.

Element 14b of Fig. 11 symbolizes a generator of the GAN system, e.g. similar or identical to generator 14, 14a of Fig. 2 or Fig. 5. Presently, the generator 14b of Fig. 11 determines, e.g. generates, a digital output image $x_{mix}$ comprising the content, e.g. semantic content, of the first digital image $x_1$ (as e.g. characterized by the noise map $\varepsilon_1$) and the style (e.g., texture and/or color and/or other non-semantic content) of the second digitial image $x_2$ (as e.g. characterized by the latent variables $w^1$, ..., $w^k$), thus e.g. mixing contend-related and style-related aspects of the respective input images $x_1$, $x_2$.

In other words, some exemplary embodiments enable to keep, e.g. preserve, the content of the first digital image $x_1$ and to transfer the style information of the second digital image $x_2$ to the first digital image $x_1$, e.g. by combining the noise prediction $\varepsilon_1$ from the first digital image $x_1$, and the (e.g. intermediate) latent variables $w_2$ of the second digital image $x_2$. In some exemplary embodiments, the, for example fixed, generator 14b, e.g. of the StyleGAN-type or of the StyleGAN2-type, takes the components $\varepsilon_1$, $w_2$ as inputs and produces the mixed image $x_{mix}$.

Returning to Fig. 6B, in some exemplary embodiments propose to regularize the noise prediction of the encoder 12, 12a, e.g. by random masking of the noise map.

In some exemplary embodiments, and as at least partly already mentioned above, the noise map is spatially divided into nonoverlapping P × P patches PATCH (see also block 132a of Fig. 8), e.g. effected by the block M of Fig. 6B.

In some exemplary embodiments, e.g. based on a pre-defined ratio ρ, a subset PATCH-SUB of the patches is e.g. randomly selected and replaced by patches of unit Gaussian random variables ε ~ N(0, 1) of the same size, wherein, for example, N(0, 1) is the prior distribution of the noise map, e.g. at a training of the generator 14, 14a (which can e.g. be of the StyleGAN2-type).

In some exemplary embodiments, the encoder 12, 12a may be denoted as a "masked noise encoder", as, in some exemplary embodiments, it is trained with random masking, e.g. to predict the noise map.

In some exemplary embodiments, the proposed random masking may reduce an encoding capacity of the noise map, hence encouraging the encoder 12, 12a to jointly exploit the latent codes {wk} for reconstruction. In some exemplary embodiments, thus, the encoder 12, 12a takes the noise map and latent codes from the content and style images, respectively. In some exemplary embodiments, then, they may be fed into the generator 14, 14a (e.g., og the StyleGAN2-type), e.g. to synthesize a new image.

In some exemplary embodiments, if the encoder 12, 12a is not trained with random masking, the new image may not have, e.g. any, perceptible difference(s) with the content image. In some exemplary embodiments, this means that the latent codes {wk} encode negligible information of the image. In contrast, in some exemplary embodiments, when being trained with masking, the encoder creates a novel image that takes the content and style from two different images. In some exemplary embodiments, this observation confirms an important role of masking for content and style disentanglement according to some exemplary embodiments, and thus the, e.g. improved, style mixing capability.

In some exemplary embodiments, the noise map does not, e.g. no longer, encode(s) all perceptible information of the image, including style and content. In some exemplary embodiments, in effect, the latent codes {wk} play a more active role in controlling the style.

In the following, aspects and information related to an encoder training loss according to some exemplary embodiments are provided.

In some exemplary embodiments, the principle according to the embodiments related to GAN inversion, e.g. StyleGAN2 inversion according to some exemplary embodiments, with a masked noised encoder $E^M$ can be formulated as

$$\{w^1, \ldots, w^K, \varepsilon\} = E^M(x);$$

$$x^* = G \circ E^M(x) = G(w^1, \ldots, w^K, \varepsilon).$$

In some exemplary embodiments, the masked noise encoder $E^M$ maps the given image $x$ onto the latent codes {$w^k$} and the noise map ε.

In some exemplary embodiments, the generator $G$ (see also element 14, 14a of Fig. 2, Fig. 5), e.g. a Style-GAN2-type generator, takes both {$w^k$} and the noise map ε as an input and generates the image $x^*$. In some exemplary embodiments, e.g. ideally, $x^*$ may be identical to $x$, i.e., a perfect reconstruction.

In some exemplary embodiments, the encoder 12, 12, e.g. the masked noise encoder $E^M$, is trained, e.g. to reconstruct the original image $x$.

In some exemplary embodiments, when training the encoder 12, 12, e.g. the masked noise encoder $E^M$ to reconstruct the original image $x$, the original noise map ε is masked, e.g. before being fed into the, e.g. pre-trained, generator $G$, wherein the masking can e.g. be characterized by:

$$\varepsilon_M = (1 - M_{noise}) \odot \varepsilon + M_{noise} \odot \epsilon,$$

$$\tilde{x} = G(w^1, \ldots, w^K, \varepsilon_M),$$

wherein $M_{noise}$ e.g. is a random binary mask, wherein $\odot$ indicates the Hadamard product, and wherein $\tilde{x}$ denotes the reconstructed image with the masked noise $\varepsilon_M$.

In some exemplary embodiments, the training loss for the encoder can be characterized by

$$\mathcal{L} = \mathcal{L}_{mse} + \lambda_1 \mathcal{L}_{lpips} + \lambda_2 \mathcal{L}_{adv} + \lambda_3 \mathcal{L}_{reg},$$

where {$\lambda_i$} are weighting factors. The first three terms are the pixel-wise MSE loss, learned perceptual image patch similarity (LPIPS) loss (e.g., according to Richard Zhang, Phillip Isola, Alexei A Efros, Eli Shechtman, and Oliver Wang: The unreasonable effectiveness of deep features as a perceptual metric. In CVPR, 2018.) and adversarial loss (e.g., according to Ian Goodfellow, Jean Pouget-Abadie, Mehdi Mirza, Bing Xu, DavidWarde-Farley, Sherjil Ozair, Aaron Courville, and Yoshua Bengio. Generative adversarial nets. In NeurIPS, 2014.):

$$\mathcal{L}_{mse} = \left\| (1 - M_{img}) \odot (x - \tilde{x}) \right\|_2 ,$$

$$\mathcal{L}_{lpips} = \left\| (1 - M_{feat}) \odot (\mathrm{VGG}(x) - \mathrm{VGG}(\tilde{x})) \right\|_2 ,$$

$$\mathcal{L}_{adv} = -\log D(G(E^M(x))).$$

Note that, in some exemplary embodiments, masking removes the information of the given image x at certain spatial positions, the reconstruction requirement on these positions should then be relaxed. In some exemplary embodiments, $M_{img}$ and $M_{feat}$ may e.g. be obtained by up- and downsampling the noise mask $M_{noise}$ to the image size and the feature size of the, e.g. VGG-based, feature extractor.

In some exemplary embodiments, the adversarial loss is obtained by formulating the encoder training as an adversarial game with a discriminator D (also see optional element 16 of Fig. 2) that is trained to distinguish between reconstructed and real images.

In some exemplary embodiments, the last regularization term is defined as

$$\mathcal{L}_{reg} = \left\| \varepsilon \right\|_1 + \left\| E_w^M(G(w_{gt}, \epsilon)) - w_{gt} \right\|_2$$

In some exemplary embodiments, the L1 norm helps to induce sparse noise prediction. In some exemplary embodiments, it is complementary to random masking, reducing the capacity of the noise map. In some exemplary embodiments, the second term is obtained by using the ground truth latent codes $w_{gt}$ of synthesized images $G(w_{gt}, \epsilon)$ to train the latent code prediction $E_w^M$ (e.g. according to Xu Yao, Alasdair Newson, Yann Gousseau, and Pierre Hellier. Feature-Style Encoder for Style-Based GAN Inversion, arXiv preprint, 2022.). In some exemplary embodiments, it guides the encoder to stay close to the original latent space of the generator, speeding up the convergence.

In some exemplary embodiments, Fig. 9, the method comprises: combining 140 the noise prediction PRED-NOISE-x1 associated with the first digital image x1 (Fig. 2) with a style prediction PRED-STYLE-x2 of a or the second digital image x2 (e.g., characterized by latent variables associated with the second digital image x2), generating 142 a further digital image x12 using the generator 14a (Fig. 5) based on the combined noise prediction associated with the first digital image x1 and the style prediction PRED-STYLE-x2 of the second digital image x2. In some exemplary embodiments, this enables to provide the further digital image(s) x12 with the style, or, for example, with at least some aspects of the style, of the second digital image x2, and, e.g., with the content of the first digital image x1.

In some exemplary embodiments, Fig. 10, the method comprises: providing 150 the noise prediction PRED-NOISE-x1 associated with the first digital image x1, providing 152 different sets of latent variables SET-LAT-VAR characterizing different styles to be applied to a, for example semantic, content of the first digital image x1, generating 154 a plurality PLUR-x of digital images with the different styles using the generator 14b (Fig. 5) based on the noise prediction PRED-NOISE-x1 associated with the first digital image x1 and the different sets SET-LAT-VAR of latent variables characterizing the different styles.

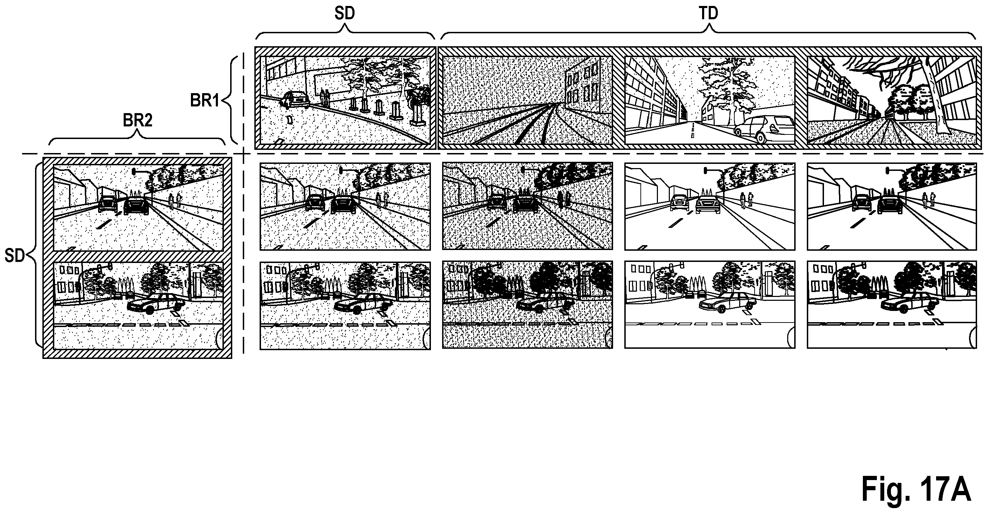

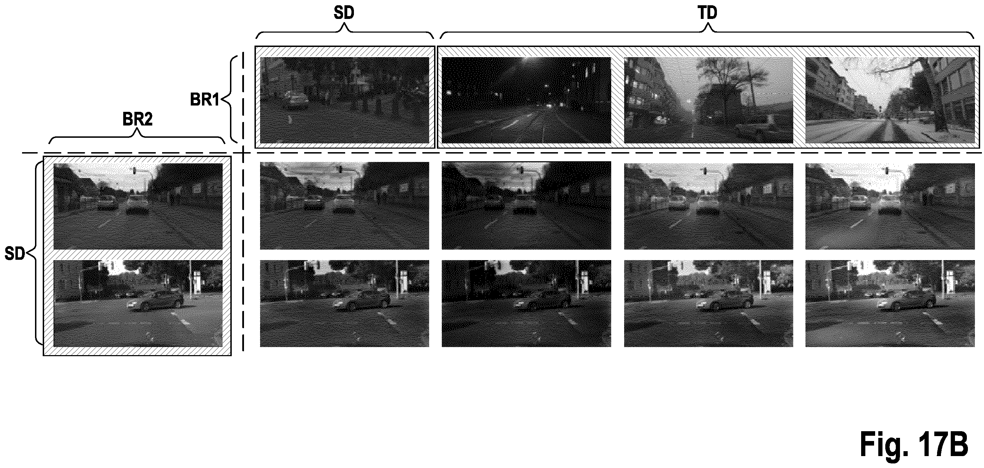

In some exemplary embodiments, there are multiple ways to obtain style information from one or more digital images and/or data sets. For example, as exemplarily shown in figure 17A, 17B, considering a sunny day scene as a source domain SD, the styles can be extracted from the training set of the source domain SD using the principle according to the embodiments. In exemplary embodiments, advantageously, this does not require extra information, e.g. from other datasets, as it can be interpreted as maximizing a usage of information in the existing data (set). Bracket BR1 of Fig. 17A, 17B symbolizes a style, bracket BR2 of Fig. 17A, 17B symbolizes content, and bracket TD symbolizes various target domains.

In some exemplary embodiments, one, e.g. single, e.g. unlabeled, image from a target domain TD (Fig. 17A, 17B), e.g., "night", "foggy" or "snowy" scenes may be used, its style may e.g. be transferred to the source domain SD, which is depicted by the second to fourth columns (denoted with reference sign TD) of Fig. 17A, 17B, respectively.

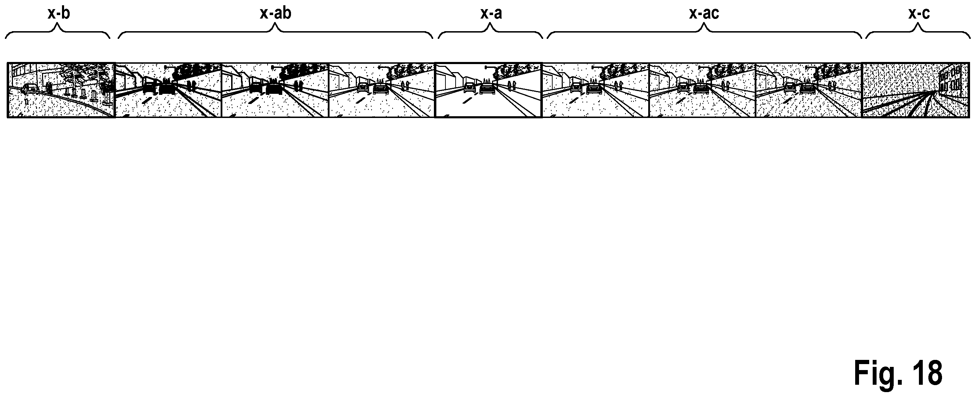

In some exemplary embodiments, styles extracted e.g. from one or more digital images, e.g. based on the principle according to the embodiments, can also be interpolated. As exemplarily shown in Fig. 18, an original digital image x-a is in the (horizontal) middle, which will e.g. provide the content information. Two further digital images x-b, x-c are provided at the left and right side of Fig. 18, respectively. Bracket x-ab denotes three digital images with interpolated styles based on the images x-a, x-b, and bracket x-ac denotes three digital images with interpolated styles based on the images x-a, x-c. As can be seen, the content information for the interpolated images x-ab, x-ac is provided by the digital image x-a, whereas the respective style information for the interpolated images x-ab, x-ac is provided by the further images x-b, x-c.

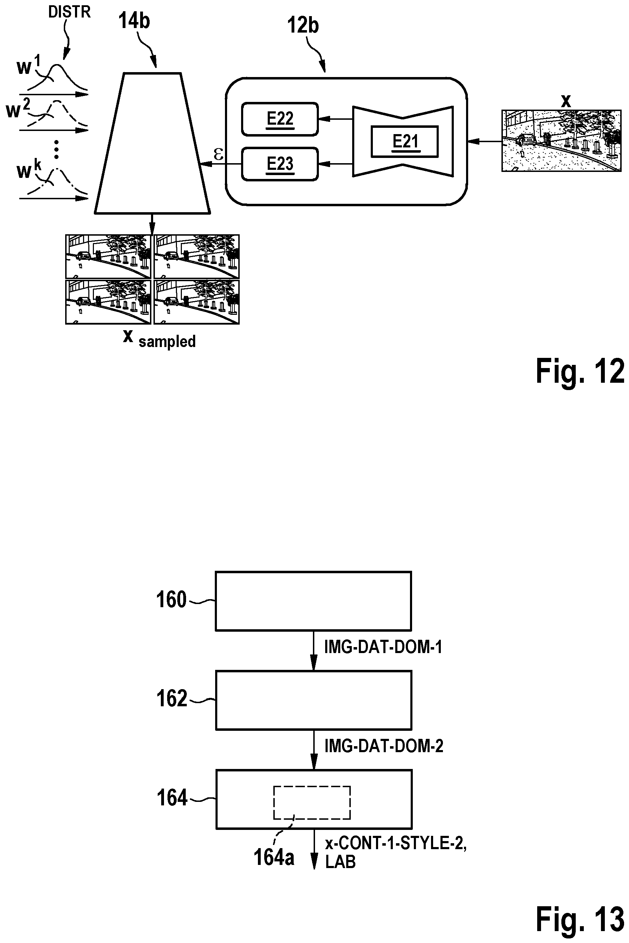

In some exemplary embodiments, as illustrated by Fig. 12, a distribution DISTR of a given dataset may be learned. In some exemplary embodiments, one Gaussian distribution can e.g. be fitted, e.g. at each scale $w^i$; $i = 1, .., k$ in the $\mathcal{W}^+$ space respectively, based on the latent w prediction of the given source dataset. In some exemplary embodiments, afterwards, e.g. given one specific digital image x, the noise prediction, e.g. noise map, $\varepsilon$ may be determined and may e.g. be combined with styles that are sampled from the regressed (or otherwise determined), e.g. Gaussian, distribution DISTR. This way, in some exemplary embodiments, numerous source-like (e.g., regarding semantic content) sample images $x_{sampled}$ can be generated, e.g. with well-preserved semantic content from the given image x. In some exemplary embodiments, the source dataset is not necessarily the one that the encoder 12, 12a, 12b is trained on.

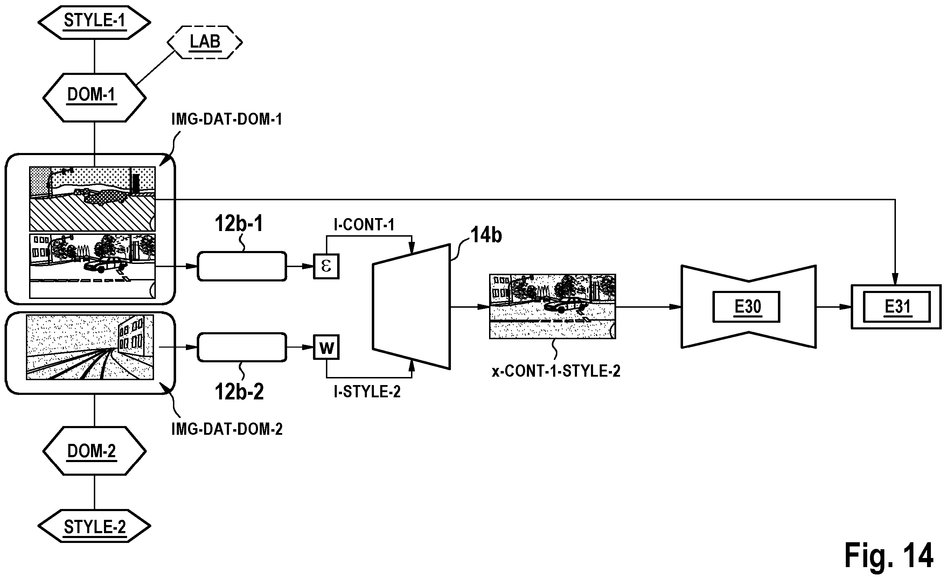

In some exemplary embodiments, Fig. 13, the method comprises: providing 160 image data IMG-DAT-DOM-1, e.g. comprising one or more digital images, associated with a first domain DOM-1 (Fig. 14), providing 162 (Fig. 13) image data IMG-DAT-DOM-2, e.g. comprising one or more digital images, associated with a second domain DOM-2, applying 164 a style STYLE-2 of the second domain DOM-2 to the image data IMG-DAT-DOM-1 associated with the first domain DOM-1, wherein image data, e.g. in the form of one or more digital "style-mixed" images x-CONT-1-STYLE-2, is obtained.

In some exemplary embodiments, Fig. 13, the image data IMG-DAT-DOM-1 associated with the first domain DOM-1 comprises labels LAB, wherein, for example, the applying 164 of the style of the second domain to the image data associated with the first domain comprises preserving 164a the labels LAB. This way, a style of the digital images of the first domain may be modified while at the same time preserving the labels LAB, thus providing further labeled image data x-CONT-1-STYLE-2 with different style(s).

In some exemplary embodiments, the style-mixed images x as e.g. obtained according to at least one of Fig. 11, Fig. 12, Fig. 13 (or accorting any other of the exemplary embodiments explained above) can be used, e.g., for data augmentation, e.g. during training of a machine learning system, e.g. comprising one or more neural networks.

For instance, Fig. 14 illustrates an exemplary use case for training a semantic segmentation network E30 according to exemplary embodiments. Element E31 symbolizes a training loss.

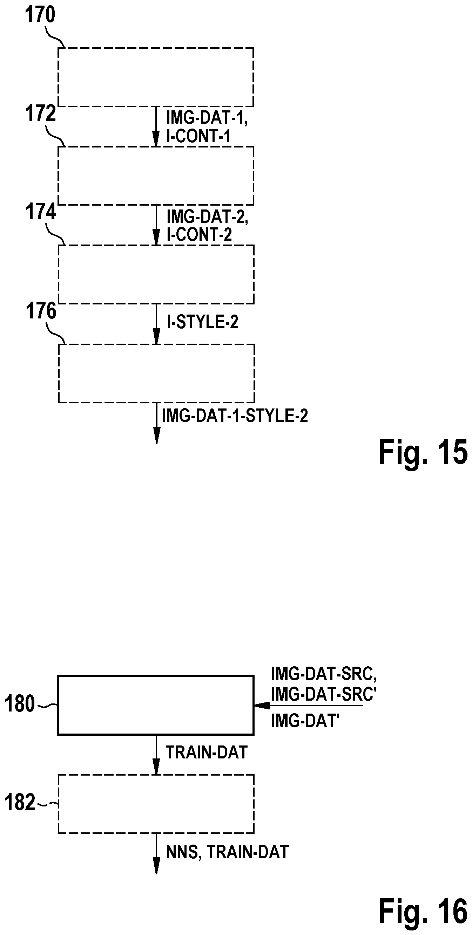

In some exemplary embodiments, Fig. 15, the method comprises: providing 170 first image data IMG-DAT-1 having first content information I-CONT-1 (which can e.g. be determined by encoder instance 12b-1 of Fig. 14), providing 172 second image data IMG-DAT-2, wherein for example the second image data IMG-DAT-2 comprises second content information I-CONT-2 different from the first content information I-CONT-1, extracting 174 style information I-STYLE-2 of the second image data IMG-DAT-2, applying 176 at least a part of the style information I-STYLE-2 of the second image data IMG-DAT-2 to the first image data IMG-DAT-1, e.g. by using the encoder 14b of Fig. 14.

Since according to exemplary embodiments, the content information I-CONT-1 remains unchanged, e.g. during the processing using the generator 14b, the labels LAB of the first domain or source domain DOM-1 may be used and they are preserved throughout the generation of style-mixed images x-CONT-1-STYLE-2. In some exemplary embodiments, style information of digital images can e.g. be translated from any target domain(s), e.g. without labels. Such data augmentation according to exemplary embodiments can e.g. be helpful for improving generalization performance.

For example, in some exemplary embodiments, a (machine learning) model trained solely on day scenes (i.e., one single, specific domain or style) may perform badly on other scenes, such as e.g. night scenes. With the proposed style-mixing data augmentation according to exemplary embodiments, a performance gap between day scenes and night scenes may be largely reduced.

Interestingly, in some exemplary embodiments, it can be observed that style mixing within a source domain can improve, e.g. boost, an out-of-domain ("ood") generalization, e.g. without access to more datasets. In some exemplary embodiments, it is hypothesized that an intra-mix stylization according to some exemplary embodiments can be helpful, e.g. for finding a near solution, e.g. of a flat optimum, which may e.g. lead to better generalization ability.

Furthermore, in some exemplary embodiments, the style-mixed images as can be obtained applying the principle according to the embodiments can also be used for validation, where the test performance can e.g. serve as a proxy indicator of generalization to select models. In some conventional approaches, there may not be a good or preferable way to pick a-priori a model with a best generalization ability given, e.g. only, a source dataset. Therefore, in some exemplary embodiments, style-mixing by applying the principle according to the embodiments may be helpful for selecting the best model, e.g. without requiring target datasets.

In some exemplary embodiments, one single, e.g. unlabeled, image can be used, e.g. is enough, e.g. for style extraction, e.g., by using the encoder 12, 12a, where the style can e.g. be transferred to a source dataset. Since in some exemplary embodiments, the source dataset may be labelled, the model can thus be tested on a style-mixed dataset. Based on a so determined test accuracy, in some exemplary embodiments, the model's generalization performance on the target dataset can be approximated.

In some exemplary embodiments, Fig. 16, the method comprises: generating 180 training data TRAIN-DAT (e.g., comprising one or more training data sets), e.g. for training at least one neural network and/or machine learning system, wherein the generating 180 is e.g. based on image data IMG-DAT-SRC of a source domain and based on modified image data IMG-DAT-SRC' of the source domain, wherein, for example, the modified image data IMG-DAT-SRC' is and/or has been modified with respect to an image style, e.g. according to the principle of the embodiments, for example based on a style of further image data IMG-DAT'. In some exemplary embodiments, optionally, training 182 the at least one neural network system NNS may be performed based on the training data TRAIN-DAT.

To summarize some exemplary aspects, in some exemplary embodiments, see, for example, Fig. 11 and Fig. 12, style-mixing and/or style sampling according to the principle of the embodiments are applied, e.g. to generate augmented images $x_{mix}$, $x_{sampled}$. As already explained above, Fig. 14 schematically illustrates an exemplary use case of a proposed data augmentation pipeline for semantic segmentation training. Visual examples of style mixing are e.g. presented in Fig. 17A, Fig. 17B (color version of Fig. 17A), where styles can e.g. be extracted from a training set of a source domain SD, and/or from an image, e.g. a single image, of a target domain TD. As also already explained above, images as can be obtained by an exemplary style interpolation according to some exemplary embodiments are shown in Fig. 18.

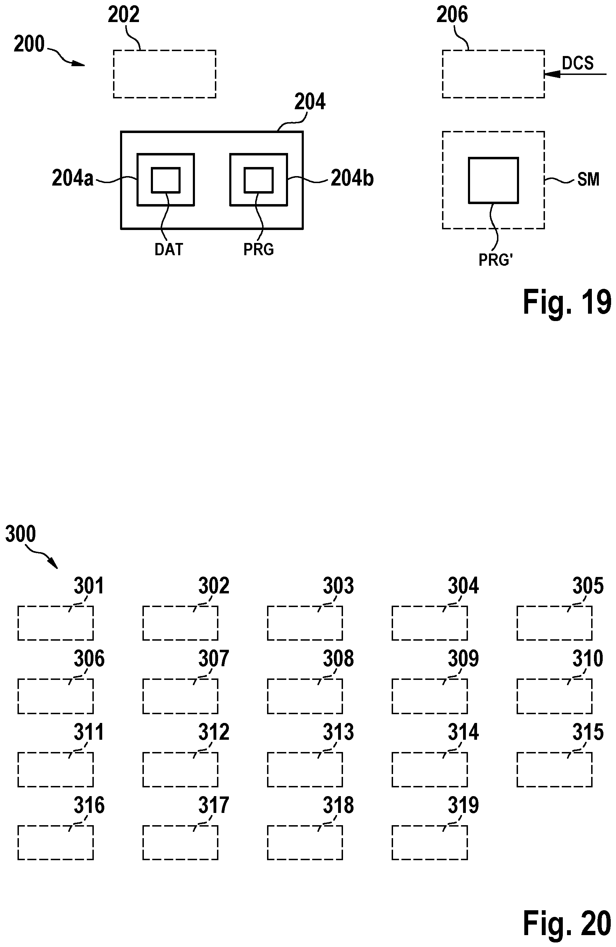

Further exemplary embodiments, Fig. 19, relate to an apparatus 200 for performing the method according to the embodiments.

In some exemplary embodiments, the apparatus 200 comprises at least one calculating unit, e.g. processor, 202 and at least one memory unit 204 associated with (i.e., usably by) the at least one calculating unit 202, e.g. for at least temporarily storing a computer program PRG and/or data DAT, wherein the computer program PRG is e.g. configured to at least temporarily control an operation of the apparatus 200, e.g. for implementing at least some aspects of the GAN system 10 (Fig. 2), e.g. the encoder 12 and/or the generator 14.

In some exemplary embodiments, the at least one calculating unit 202 comprises at least one core (not shown) for executing the computer program PRG or at least parts thereof, e.g. for executing the method according to the embodiments or at least one or more steps and/or other aspects thereof.

According to further exemplary embodiments, the at least one calculating unit 202 may comprise at least one of the following elements: a microprocessor, a microcontroller, a digital signal processor (DSP), a programmable logic element (e.g., FPGA, field programmable gate array), an ASIC (application specific integrated circuit), hardware circuitry, a tensor processor, a graphics processing unit (GPU). According to further preferred embodiments, any combination of two or more of these elements is also possible.

According to further exemplary embodiments, the memory unit 204 comprises at least one of the following elements: a volatile memory 204a, e.g. a random-access memory (RAM), a non-volatile memory 204b, e.g. a Flash-EEPROM.

In some exemplary embodiments, the computer program PRG is at least temporarily stored in the non-volatile memory 204b. Data DAT, e.g. associated with at least one of: a) digital image(s), b) parameters and/or hyperparameters of the GAN system 10, c) latent variables, d) random data, e.g. for masking a noise map, e) distribution(s) DISTR, f) content information I-CONT-1, g) style information I-STYLE-2 and the like, which may e.g. be used for executing the method according to some exemplary embodiments, may at least temporarily be stored in the RAM 204a.

In some exemplary embodiments, an optional computer-readable storage medium SM comprising instructions, e.g. in the form of a further computer program PRG', may be provided, wherein the further computer program PRG', when executed by a computer, i.e. by the calculating unit 202, may cause the computer 202 to carry out the method according to the embodiments. As an example, the storage medium SM may comprise or represent a digital storage medium such as a semiconductor memory device (e.g., solid state drive, SSD) and/or a magnetic storage medium such as a disk or harddisk drive (HDD) and/or an optical storage medium such as a compact disc (CD) or DVD (digital versatile disc) or the like.

In some exemplary embodiments, the apparatus 200 may comprise an optional data interface 206, e.g. for bidirectional data exchange with an external device (not shown). As an example, by means of the data interface 206, a data carrier signal DCS may be received, e.g. from the external device, for example via a wired or a wireless data transmission medium, e.g. over a (virtual) private computer network and/or a public computer network such as e.g. the Internet.

In some exemplary embodiments, the data carrier signal DCS may represent or carry the computer program PRG, PRG' according to the embodiments, or at least a part thereof.

Further exemplary embodiments relate to a computer program PRG, PRG' comprising instructions which, when the program is executed by a computer 202, cause the computer 202 to carry out the method according to the embodiments.

Further exemplary embodiments, Fig. 20, relate to a use 30 of the method according to the embodiments and/or of the apparatus 200 according to the embodiments and/or of the computer program PRG, PRG' according to the embodiments and/or of the computer-readable storage medium SM according to the embodiments and/or of the data carrier signal DCS according to the embodiments for at least one of: a) determining 301 at least one further digital image based on the noise prediction associated with the first digital image and a plurality of latent variables associated with the extended latent space, at least some of the plurality of latent variables being associated with another image and/or other data than the first digital image, b) transferring 302 a style from a second digital image to the first digital image, e.g. while preserving a content of the first digital image, c) disentangling 303 style and content of at least one digital image, d) creating 304 different stylized digital images with unchanged content (see, for example, Fig. 18), e.g. based on the first digital image and a style of at least one further, e.g. second, digital image, e) using 305, e.g. re-using, labelled annotations for stylized images, f) avoiding 306 annotation work when changing a style of at least one digital image, g) generating 307, e.g. perceptually realistic, digital images, e.g. with different styles, h) providing 308 proxy validation set, e.g. for testing out-of-distribution generalization, e.g. of a neural network system, i) training 309 a machine learning system, j) testing 310 a machine learning system, k) verifying 311 a machine learning system, l) validating 312 a machine learning system, m) generating 313 training data, e.g. for a machine learning system, n) data 314 augmentation, e.g. of existing image data, o) improving 315 a generalization performance of a machine learning system, p) manipulating 316, e.g. flexibly manipulating, image styles, e.g. without a training associated with multiple data sets, q) utilizing 317 an encoder GAN pipeline 12, 14 to manipulate image styles, r) embedding 318, by the encoder 12, information associated with an image style into, for example intermediate, latent variables, s) mixing 319 styles of digital images, e.g. for generating at least one further digital image comprising a style based on the mixing.

In the following, further aspects and advantages according to further exemplary embodiments are provided, which, in some exemplary embodiments, may be combined with each other and/or with at least one of the exemplary aspects explained above.

In some conventional approaches, the i.i.d (independent and identically distributed) assumption has been made for deep learning, i.e., training and test data such as e.g. digital images should be drawn from the same distribution. However, in real life, the i.i.d assumption can be easily violated. For example, different weather conditions, different cities can cause distribution shifts. In at least some conventional approaches, such data shifts can lead to severe performance degradation. In at least some conventional approaches, unsupervised domain adaptation or domain generalization aims to mitigate this issue.

In some conventional approaches, data augmentation techniques such as e.g. color transformation and CutMix (https://arxiv.org/pdf/1912.04958.pdf) are proposed, which can modify randomly an appearance of a dataset, but which cannot transfer appearances/styles of another dataset to a source dataset. In some conventional approaches, Image to Image Translation for Domain Adaptation can do such targeted translation, but requires the image-to-image translation model to be trained on both source and target domain.

In some exemplary embodiments, the principle according to the embodiments can e.g. be seen and/or used as an enhancement to Encoder-GAN architectures, such as Encoding in Style: a StyleGAN Encoder for Image-to-Image Translation (pSp) (https://arxiv.org/pdf/2008.00951.pdf). Particularly, and in contrast to the conventional approaches, the principle according to the embodiments can flexibly manipulate image styles, e.g. without multi-dataset training. In some exemplary embodiments, the images, e.g. synthesized images, as obtained by applying the principle according to the embodiments can be used for data augmentation during network training, e.g. to improve model generalization performance.

In some exemplary embodiments, stylized images as e.g. obtained by applying the principle according to the embodiments can be used for validation, e.g. to indicate a model's out-of-distribution (ood) generalization capability.

In some exemplary embodiments, an Encoder-GAN pipeline is used to manipulate image styles. In some exemplary embodiments, it can be observed that a, for example properly, trained encoder can disentangle style and content information in an unsupervised manner. More specifically, in some exemplary embodiments, the encoder can embed style information into intermediate latent variables and content information into noises. Moreover, in some exemplary embodiments, this pipeline generalizes well to unseen datasets.

In some exemplary embodiments, taking advantage of these appealing properties of the encoder GAN pipeline related to the principle according to the embodiments, multiple applications, e.g. to manipulate image styles and/or further usages, e.g. during training and/or validation are proposed.

In some exemplary embodiments, the principle according to the embodiments enables to transfer styles of other datasets to a source dataset and to generate stylized images with well-preserved content information of the original images.

In some exemplary embodiments, the principle according to the embodiments enables to interpolate styles and/or to learn a style distribution and to sample from the style distribution. In some exemplary embodiments, the stylized images as obtained by applying the principle according to the embodiments can e.g. be used for data augmentation, e.g. during training.

In some exemplary embodiments, the stylized images as obtained by applying the principle according to the embodiments can e.g. be used as proxy validation sets, e.g. for out-of-distribution (ood) data, where the test accuracy on stylized synthetic images can predict the ood generalization performance to a certain extent. In some exemplary embodiments, this can be useful for model selection. For example, for a model trained on sunny day scenes (source domain), night, foggy, snowy and any scenes under other different weather conditions are considered as ood samples. In some exemplary embodiments, styles of the ood samples can be transferred to the source domain while preserving the content of the source images. In some exemplary embodiments, since source domain images may be labelled, models can be tested on stylized source images, and the test accuracy can indicate the model's ood generalization ability.

In some exemplary embodiments, e.g. thanks to the style-content disentanglement of the encoder 12, 12a, exemplary embodiments enable to generate different stylized images while the content of the images remains unchanged, e.g. the same content as in the original image. Thus, in some exemplary embodiments, labelled annotations of the original images can also be used for the stylized images.

In some conventional approaches, when drawing samples from a distribution that is not covered by existing data, the gathered samples are required to be labeled, which is not the case with exemplary embodiments due to preserving the labels.

Thus, in some exemplary embodiments, time and/or costs, e.g. for an additional annotation work, can be saved.

Further, in some exemplary embodiments, the style-mixed images as may be obtained by applying the principle of the embodiments are perceptually realistic and e.g. close to the target datasets. Therefore, in some exemplary embodiments, they can be used as a proxy validation set for testing out-of-distribution generalization.

In some exemplary embodiments, an Encoder-GAN pipeline according to the principle of the embodiments does not require training on the target datasets, e.g. like some conventional image-to-image translation methods. In some exemplary embodiments, a single dataset trained model generalizes well to unseen datasets, which enables more flexible style mixing and manipulation.

In some exemplary embodiments, the principle of the embodiments can e.g. be used for at least one of: training a machine learning (ML) system, generating training data for this training, generating test data, e.g. to check whether the trained ML system can then be safely operated.

In some exemplary embodiments, aspects of the embodiments relate to and/or characterize a generative model, e.g. to generate training or test data, and to a method to train the generative model.

In some exemplary embodiments, the principle according to the embodiments may e.g. be used for at least one of, but not limited to: a) data analysis, e.g. analysis of digital image and/or video data, b) classifying digital image data, c) detecting the presence of objects in the data, d) performing a semantic segmentation on the data, e.g. regarding at least one of, but not limited to: d1) traffic signs, d2) road surfaces, d3) pedestrians, d4) vehicles, d5) object classes that may e.g. show in a semantic segmentation task, e.g., trees, sky, ...

**Claims**

1. A computer-implemented method of processing digital image data, comprising: determining (100), by an encoder (12; 12a) configured to map a first digital image (x1) to an extended latent space (SP-W+) associated with a generator (14; 14a) of a generative adversarial network, GAN, system (10), a noise prediction (PRED-NOISE-x1) associated with the first digital image (x1), determining (102), by the generator (14) of the GAN system (10), at least one further digital image (x') based on the noise prediction (PRED-NOISE-x1) associated with the first digital image (x1) and a plurality (LAT-VAR) of latent variables associated with the extended latent space (SP-W+).

2. The method according to claim 1, comprising: determining (110) the plurality (LAT-VAR) of latent variables based on at least one of: a) a second digital image (x2), which is different from the first digital image (x1), e.g. using the encoder (12), b) a plurality of probability distributions (DISTR).

3. The method according to any of the preceding claims, wherein at least some of the plurality (LAT-VAR) of latent variables associated with the extended latent space (SP-W+) characterize at least one of the following aspects of the first digital image (x1): a) a style, e.g. a non-semantic appearance, b) a texture, c) a color.

4. The method according to any of the preceding claims, comprising at least one of: a) determining (120) a plurality of, for example hierarchical, feature maps (FM) based on the first digital image (x1), b) determining (122) a plurality (LAT-VAR-x1) of latent variables associated with the extended latent space (SP-W+) for the first digital image (x1) based on the plurality of, for example hierarchical, feature maps (FM), c) determining (124) a, for example additive, noise map (NOISE-MAP) based on at least one of the plurality of, for example hierarchical, feature maps (FM).

5. The method according to at least one of the preceding claims, comprising: randomly and/or pseudo-randomly masking (130) at least a portion of the noise prediction (PRED-NOISE-x1) associated with the first digital image (x1).

6. The method according to at least one of the claims 4 to 5, comprising: masking (132) of the noise map (NOISE-MAP), e.g. in a random and/or pseudo-random fashion.

7.  The method according to claim 6, comprising: dividing (132a), e.g. spatially dividing, the noise map (NOISE-MAP; $\varepsilon$) into a plurality of, e.g. P x P many, e.g. non-overlapping, patches (PATCH), selecting (132b), in a random and/or pseudo-random fashion, a subset (PATCH-SUB) of the patches (PATCH), replacing (132c) the subset (PATCH-SUB) of the patches (PATCH) by patches (PATCH-RND) of, e.g. unit Gaussian, random variables, e.g. of the same size.

8.  The method according to at least one of the preceding claims, comprising: combining (140) the noise prediction (PRED-NOISE-x1) associated with the first digital image (x1) with a style prediction (PRED-STYLE-x2) of a or the second digital image (x2), generating (142) a further digital image (x12) using the generator (14) based on the combined noise prediction (PRED-NOISE-x1) associated with the first digital image (x1) and style prediction (PRED-STYLE-x2) of the second digital image (x2).

9.  The method according to at least one of the preceding claims, comprising: providing (150) the noise prediction (PRED-NOISE-x1) associated with the first digital image (x1), providing (152) different sets (SET-LAT-VAR) of latent variables characterizing different styles to be applied to a, for example semantic, content of the first digital image (x1), generating (154) a plurality (PLUR-x) of digital images with the different styles using the generator (14) based on the noise prediction (PRED-NOISE-x1) associated with the first digital image (x1) and the different sets (SET-LAT-VAR) of latent variables characterizing the different styles.

10. The method according to at least one of the preceding claims, comprising: providing (160) image data (IMG-DAT-DOM-1), e.g. comprising one or more digital images, associated with a first domain (DOM-1), providing (162) image data (IMG-DAT-DOM-2), e.g. comprising one or more digital images, associated with a second domain (DOM-2), applying (164) a style (STYLE-2) of the second domain (DOM-2) to the image data (IMD-DAT-DOM-1) associated with the first domain (DOM-1).

11. The method according to claim 10, wherein the image data (IMG-DAT-DOM-1) associated with the first domain (DOM-1) comprises labels (LAB), wherein, for example, the applying (164) of the style (STYLE-2) of the second domain (DOM-2) to the image data (IMD-DAT-DOM-1) associated with the first domain (DOM-1) comprises preserving (164a) the labels (LAB).

12. The method according to at least one of the preceding claims, comprising: providing (170) first image data (IMG-DAT-1) having first content information (I-CONT-1), providing (172) second image data (IMG-DAT-2), wherein for example the second image data (IMG-DAT-2) comprises second content information (I-CONT-2) different from the first content information (I-CONT-1), extracting (174) style information (I-STYLE-2) of the second image data (IMG-DAT-2), applying (176) at least a part of the style information (I-STYLE-2) of the second image data (IMG-DAT-2) to the first image data (IMG-DAT-1).

13. The method according to at least one of the preceding claims, comprising: generating (180) training data (TRAIN-DAT), e.g. for training at least one neural network system (NNS), wherein the generating (180) is e.g. based on image data (IMG-DAT-SRC) of a source domain and based on modified image data (IMG-DAT-SRC') of the source domain, wherein, for example, the modified image data (IMG-DAT-SRC') is and/or has been modified with respect to an image style, for example based on a style of further image data (IMG-DAT'), and, optionally, training (182) the at least one neural network system (NNS) based on the training data (TRAIN-DAT).

14. An apparatus (200) for performing the method according to at least one of the preceding claims.

15. A computer program (PRG; PRG') comprising instructions which, when the program (PRG; PRG') is executed by a computer (202), cause the computer (202) to carry out the method according to at least one of the claims 1 to 13.

16. A computer-readable storage medium (SM) comprising instructions (PRG') which, when executed by a computer (202), cause the computer (202) to carry out the method according to at least one of the claims 1 to 13.

17. A data carrier signal (DCS) carrying and/or characterizing the computer program (PRG; PRG') of claim 15.

18. A use (300) of the method according to at least one of the claims 1 to 13 and/or of the apparatus (200) according to claim 14 and/or of the computer program (PRG; PRG;) according to claim 15 and/or of the computer-readable storage medium (SM) according to claim 16 and/or of the data carrier signal (DCS) according to claim 17 for at least one of: a) determining (301) at least one further digital image (x') based on the noise prediction (PRED-NOISE-x1) associated with the first digital image (x1) and a plurality (LAT-VAR) of latent variables associated with the extended latent space (SP-W+), at least some of the plurality (LAT-VAR) of latent variables being associated with another image and/or other data than the first digital image (x1), b) transferring (302) a style from a second digital image to the first digital image, e.g. while preserving a content of the first digital image, c) disentangling (303) style and content of at least one digital image, d) creating (304) different stylized digital images with unchanged content, e.g. based on the first digital image and a style of at least one further, e.g. second, digital image, e) using (305), e.g. re-using, labelled annotations for stylized images, f) avoiding (306) annotation work when changing a style of at least one digital image, g) generating (307), e.g. perceptually realistic, digital images, e.g. with different styles, h) providing (308) proxy validation set(s), e.g. for testing out-of-distribution generalization, e.g. of a neural network system, i) training (309) a machine learning system, j) testing (310) a machine learning system, k) verifying (311) a machine learning system, l) validating (312) a machine learning system, m) generating (313) training data, e.g. for a machine learning system, n) data augmentation (314), e.g. of existing image data, o) improving (315) a generalization performance of a machine learning system, p) manipulating (316), e.g. flexibly manipulate, image styles, e.g. without a training associated with multiple data sets, q) utilizing (317) an encoder GAN pipeline to manipulate image styles, r) embedding (318), by the encoder (12), information associated with an image style into, for example intermediate, latent variables, s) mixing (319) styles of digital images, e.g. for generating at least one further digital image comprising a style based on the mixing (319).

## Patentansprüche

1. Computer-implementiertes Verfahren zum Verarbeiten digitaler Bilddaten, umfassend: Bestimmen (100), durch einen Encoder (12; 12a), der ausgelegt ist zum Abbilden eines ersten digitalen Bildes (x1) auf einen erweiterten latenten Raum (SP-W+), der mit einem Generator (14; 14a) eines generativen gegnerischen Netzwerksystems, GAN-Systems, (10) assoziiert ist, einer Rauschvorhersage (PRED-NOISE-x1), die mit dem ersten digitalen Bild (x1) assoziiert ist, Bestimmen (102), durch den Generator (14) des GAN-Systems (10), mindestens eines weiteren digitalen Bildes (x') basierend auf der Rauschvorhersage (PRED-NOISE-x1), die mit dem ersten digitalen Bild (x1) assoziiert ist, und einer Mehrzahl (LAT-VAR) latenter Variablen, die mit dem erweiterten latenten Raum (SP-W+) assoziiert sind.

2. Verfahren nach Anspruch 1, umfassend: Bestimmen (110) der Mehrzahl (LAT-VAR) latenter Variablen basierend auf mindestens einem von Folgendem: a) einem zweiten digitalen Bild (x2), das sich vom ersten digitalen Bild (x1) unterscheidet, z. B. unter Verwendung des Encoders (12), b) einer Mehrzahl von Wahrscheinlichkeitsverteilungen (DISTR).

3. Verfahren nach einem der vorstehenden Ansprüche, wobei zumindest einige der Mehrzahl (LAT-VAR) latenter Variablen, die mit dem erweiterten latenten Raum (SP-W+) assoziiert sind, mindestens einen der folgenden Aspekte des ersten digitalen Bildes (x1) charakterisieren: a) einen Stil, z. B. ein nicht semantisches Erscheinungsbild, b) eine Textur, c) eine Farbe.

4. Verfahren nach einem der vorstehenden Ansprüche, umfassend mindestens eines von Folgendem: a) Bestimmen (120) einer Mehrzahl von beispielsweise hierarchischen Merkmalskarten (FM) basierend auf dem ersten digitalen Bild (x1), b) Bestimmen (122) einer Mehrzahl (LAT-VAR-x1) latenter Variablen, die mit dem erweiterten latenten Raum (SP-W+) assoziiert sind, für das erste digitale Bild (x1) basierend auf der Mehrzahl von beispielsweise hierarchischen Merkmalskarten (FM), c) Bestimmen (124) einer beispielsweise additiven Rauschkarte (NOISE-MAP) basierend auf mindestens einer der Mehrzahl von beispielsweise hierarchischen Merkmalskarten (FM).

5. Verfahren nach mindestens einem der vorstehenden Ansprüche, umfassend: zufälliges und/oder pseudozufälliges Maskieren (130) zumindest eines Abschnitts der Rauschvorhersage (PRED-NOISE-x1), die mit dem ersten digitalen Bild (x1) assoziiert ist.

6. Verfahren nach mindestens einem der Ansprüche 4 bis 5, umfassend: Maskieren (132) der Rauschkarte (NOISE-MAP) z. B. auf eine zufällige und/oder pseudozufällige Weise.

7. Verfahren nach Anspruch 6, umfassend: Teilen (132a), z. B. räumliches Teilen, der Rauschkarte (NOISE-MAP; $\varepsilon$) in eine Mehrzahl von, z. B. P x P, z. B. nicht überlappenden, Patches (PATCH), Auswählen (132b), auf eine zufällige und/oder pseudozufällige Weise, eines Teilsatzes (PATCH-SUB) der Patches (PATCH), Ersetzen (132c) des Teilsatzes (PATCH-SUB) der Patches (PATCH) mit Patches (PATCH-RND) von, z. B. Einheits-Gauß-, Zufallsvariablen mit z. B. der gleichen Größe.

8. Verfahren nach mindestens einem der vorstehenden Ansprüche, umfassend: Kombinieren (140) der Rauschvorhersage (PRED-NOISE-x1), die mit dem ersten digitalen Bild (x1) assoziiert ist, mit einer Stilvorhersage (PRED-STYLE-x2) eines oder des zweiten digitalen Bildes (x2), Erzeugen (142) eines weiteren digitalen Bildes (x12) unter Verwendung des Generators (14) basierend auf der kombinierten Rauschvorhersage (PRED-NOISE-x1), die mit dem ersten digitalen Bild (x1) assoziiert ist, und Stilvorhersage (PRED-STYLE-x2) des zweiten digitalen Bildes (x2).

9. Verfahren nach mindestens einem der vorstehenden Ansprüche, umfassend: Bereitstellen (150) der Rauschvorhersage (PRED-NOISE-x1), die mit dem ersten digitalen Bild (x1) assoziiert ist, Bereitstellen (152) unterschiedlicher Sätze (SET-LAT-VAR) latenter Variablen, die unterschiedliche Stile charakterisieren, die auf einen beispielsweise semantischen Inhalt des ersten digitalen Bildes (x1) angewendet werden sollen, Erzeugen (154) einer Mehrzahl (PLUR-x) digitaler Bilder mit den unterschiedlichen Stilen unter Verwendung des Generators (14) basierend auf der Rauschvorhersage (PRED-NOISE-x1), die mit dem ersten digitalen Bild (x1) assoziiert ist, und den unterschiedlichen Sätzen (SET-LAT-VAR) latenter Variablen, die die unterschiedlichen Stile charakterisieren.

10. Verfahren nach mindestens einem der vorstehenden Ansprüche, umfassend: Bereitstellen (160) von Bilddaten (IMG-DAT-DOM-1), die z. B. ein oder mehrere digitale Bilder umfassen, die mit einer ersten Domäne (DOM-1) assoziiert sind, Bereitstellen (162) von Bilddaten (IMG-DAT-DOM-2), die z. B. ein oder mehrere digitale Bilder umfassen, die mit einer zweiten Domäne (DOM-2) assoziiert sind, Anwenden (164) eines Stils (STYLE-2) der zweiten Domäne (DOM-2) auf die Bilddaten (IMD-DAT-DOM-1), die mit der ersten Domäne (DOM-1) assoziiert sind.

11. Verfahren nach Anspruch 10, wobei die Bilddaten (IMG-DAT-DOM-1), die mit der ersten Domäne (DOM-1) assoziiert sind, Labels (LAB) umfassen, wobei beispielsweise das Anwenden (164) des Stils (STYLE-2) der zweiten Domäne (DOM-2) auf die Bilddaten (IMD-DAT-DOM-1), die mit der ersten Domäne (DOM-1) assoziiert sind, das Bewahren (164a) der Labels (LAB) umfasst.

12. Verfahren nach mindestens einem der vorstehenden Ansprüche, umfassend: Bereitstellen (170) erster Bilddaten (IMG-DAT-1), die erste Inhaltsinformationen (I-CONT-1) aufweisen, Bereitstellen (172) zweiter Bilddaten (IMG-DAT-2), wobei beispielsweise die zweiten Bilddaten (IMG-DAT-2) zweite Inhaltsinformationen (I-CONT-2) umfassen, die sich von den ersten Inhaltsinformationen (I-CONT-1) unterscheiden, Extrahieren (174) von Stilinformationen (I-STYLE-2) der zweiten Bilddaten (IMG-DAT-2), Anwenden (176) zumindest eines Teils der Stilinformationen (I-STYLE-2) der zweiten Bilddaten (IMG-DAT-2) auf die ersten Bilddaten (IMG-DAT-1).

13. Verfahren nach mindestens einem der vorstehenden Ansprüche, umfassend: Erzeugen (180) von Trainingsdaten (TRAIN-DAT), z. B. zum Trainieren mindestens eines neuronalen Netzwerksystems (NNS), wobei das Erzeugen (180) z. B. auf Bilddaten (IMG-DAT-SRC) einer Quelldomäne basiert und auf modifizierten Bilddaten (IMG-DAT-SRC') der Quelldomäne basiert, wobei beispielsweise die modifizierten Bilddaten (IMG-DAT-SRC) bezüglich eines Bildstils modifiziert werden und/oder wurden, beispielsweise basierend auf einem Stil weiterer Bilddaten (IMG-DAT'), und optional Trainieren (182) des mindestens einen neuronalen Netzwerksystems (NNS) basierend auf den Trainingsdaten (TRAIN-DAT).

14. Einrichtung (200) zum Durchführen des Verfahrens nach mindestens einem der vorstehenden Ansprüche.

15. Computerprogramm (PRG; PRG'), das Anweisungen umfasst, die dann, wenn das Programm (PRG; PRG') durch einen Computer (202) ausgeführt wird, veranlassen, dass der Computer (202) das Verfahren nach mindestens einem der Ansprüche 1 bis 13 ausführt.

16. Computer-lesbares Speichermedium (SM), das Anweisungen (PRG') umfasst, die, wenn sie durch einen Computer (202) ausgeführt werden, den Computer (202) veranlassen, das Verfahren nach mindestens einem der Ansprüche 1 bis 13 auszuführen.

17. Datenträgersignal (DCS), das das Computerprogramm (PRG; PRG') nach Anspruch 15 führt und/oder charakterisiert.

18. Verwendung (300) des Verfahrens nach mindestens einem der Ansprüche 1 bis 13 und/oder der Einrichtung (200) nach Anspruch 14 und/oder des Computerprogramms (PRG; PRG;) nach Anspruch 15 und/oder des computerlesbaren Speichermediums (SM) nach Anspruch 16 und/oder des Datenträgersignals (DCS) nach Anspruch 17 für mindestens eines von Folgendem: a) Bestimmen (301) mindestens eines weiteren digitalen Bildes (x') basierend auf der Rauschvorhersage (PRED-NOISE-x1), die mit dem ersten digitalen Bild (x1) assoziiert ist, und einer Mehrzahl (LAT-VAR) latenter Variablen, die mit dem erweiterten latenten Raum (SP-W+) assoziiert sind, wobei zumindest einige der Mehrzahl (LAT-VAR) latenter Variablen mit einem anderen Bild und/oder anderen Daten als das erste digitale Bild (x1) assoziiert sind, b) Transferieren (302) eines Stils von einem zweiten digitalen Bild zu dem ersten digitalen Bild, z. B. während ein Inhalt des ersten digitalen Bildes bewahrt wird, c) Entflechten (303) von Stil und Inhalt mindestens eines digitalen Bildes, d) Erstellen (304) unterschiedlicher stilisierter digitaler Bilder mit unverändertem Inhalt z. B. basierend auf dem ersten digitalen Bild und einem Stil mindestens eines weiteren, z. B. zweiten, digitalen Bildes, e) Verwenden (305), z. B. Wiederverwenden, gelabelter Annotationen für stilisierte Bilder, f) Vermeiden (306) von Annotationsarbeit, wenn ein Stil mindestens eines digitalen Bildes geändert wird, g) Erzeugen (307), z. B. wahrnehmungsrealistischer, digitaler Bilder, z. B. mit unterschiedlichen Stilen, h) Bereitstellen (308) eines oder mehrerer Proxy-Validierungssätze z. B. zum Testen der Out-of-Distribution-Generalisierung z. B. eines neuronalen Netzwerksystems, i) Trainieren (309) eines maschinellen Lernsystems, j) Testen (310) eines maschinellen Lernsystems, k) Verifizieren (311) eines maschinellen Lernsystems, l) Validieren (312) eines maschinellen Lernsystems, m) Erzeugen (313) von Trainingsdaten z. B. für ein maschinelles Lernsystem, n) Datenaugmentation (314) z. B. bestehender Bilddaten, o) Verbessern (315) einer Generalisierungsleistung eines maschinellen Lernsystems, p) Manipulieren (316), z. B. flexibles Manipulieren, von Bildstilen z. B. ohne ein Training, das mit mehreren Datensätzen assoziiert ist, q) Nutzen (317) einer Encoder-GAN-Pipeline zum Manipulieren von Bildstilen, r) Einbetten (318), durch den Encoder (12), von Informationen, die mit einem Bildstil assoziiert sind, in, zum Beispiel intermediäre, latente Variablen, s) Mischen (319) von Stilen digitaler Bilder z. B. zum Erzeugen mindestens eines weiteren digitalen Bildes, das einen Stil basierend auf dem Mischen (319) umfasst.

## Revendications

1. Procédé mis en œuvre par ordinateur pour le traitement de données d'images numériques, comprenant : la détermination (100), par un encodeur (12 ; 12a) configuré pour mettre en correspondance une première image numérique (x1) sur un espace latent étendu (SP-W+) associé à un générateur (14 ; 14a) d'un système de réseau antagoniste génératif, GAN, (10), d'une prédiction de bruit (PRED-NOISE-x1) associée à la première image numérique (x1), la détermination (102), par le générateur (14) du système GAN (10), d'au moins une autre image numérique (x') sur la base de la prédiction de bruit (PRED-NOISE-x1) associée à la première image numérique (x1) et d'une pluralité (LAT-VAR) de variables latentes associées à l'espace latent étendu (SP-W+).

2. Procédé selon la revendication 1 comportant : la détermination (110) de la pluralité (LAT-VAR) de variables latentes sur la base d'au moins l'une : a) d'une deuxième image numérique (x2), qui est différente de la première image numérique (x1), par exemple au moyen de l'encodeur (12), b) d'une pluralité de distributions de probabilités (DISTR).

3. Procédé selon l'une quelconque des revendications précédentes, dans lequel au moins certaines variables de la pluralité (LAT-VAR) de variables latentes associées à l'espace latent étendu (SP-W+) caractérisent au moins l'un des aspects suivants de la première image numérique (x1) : a) un style, par exemple, une apparence non sémantique, b) une texture, c) une couleur.

4. Procédé selon l'une quelconque des revendications précédentes, comprenant au moins l'une des opérations suivantes : a) détermination (120) d'une pluralité de cartes de caractéristiques (FM), par exemple hiérarchiques, sur la base de la première image numérique (x1), b) détermination (122) d'une pluralité (LAT-VAR-x1) de variables latentes associées à l'espace latent étendu (SP-W+) pour la première image numérique (x1) sur la base de la pluralité de cartes de caractéristiques (FM), par exemple hiérarchiques, c) détermination (124) d'une carte de bruits (NOISE-MAP), par exemple additive, sur la base d'au moins l'une de la pluralité de cartes de caractéristiques (FM), par exemple hiérarchiques.

5. Procédé selon au moins l'une des revendications précédentes, comprenant : le masquage aléatoire et/ou pseudo-aléatoire (130) d'au moins une partie de la prédiction de bruit (PRED-NOISE-x1) associée à la première image numérique (x1).

6. Procédé selon au moins l'une des revendications 4 à 5, comprenant : le masquage (132) de la carte de bruits (NOISE-MAP), par exemple d'une manière aléatoire et/ou pseudo-aléatoire.

7. Procédé selon la revendication 6 comprenant : la division (132a), par exemple la division spatiale, de la carte de bruits (NOISE-MAP ; $\varepsilon$) en une pluralité de morceaux (PATCH), par exemple un nombre de P x P, ne se chevauchant pas, la sélection (132b), d'une manière aléatoire et/ou pseudo-aléatoire, d'un sous-ensemble (PATCH-SUB) des morceaux (PATCH), le remplacement (132c) du sous-ensemble (PATCH-SUB) des morceaux (PATCH) par des morceaux (PATCH-RND) de variables aléatoires, par exemple gaussiennes unitaires, par exemple de même taille.

8. Procédé selon au moins l'une des revendications précédentes, comprenant : la combinaison (140) de la prédiction de bruit (PRED-NOISE-x1) associée à la première image numérique (x1) avec une prédiction de style (PRED-STYLE-x2) d'une ou de la deuxième image numérique (x2), la génération (142) d'une autre image numérique (x12) au moyen du générateur (14) sur la base de la prédiction de bruit combinée (PRED-NOISE-x1) associée à la première image numérique (x1) et une prédiction de style (PRED-STYLE-x2) de la deuxième image numérique (x2).

9. Procédé selon au moins l'une des revendications précédentes, comprenant : la fourniture (150) de la prédiction de bruit (PRED-NOISE-x1) associée à la première image numérique (x1), la fourniture (152) de différents ensembles (SET-LAT-VAR) de variables latentes caractérisant différents styles à appliquer à un contenu, par exemple sémantique, de la première image numérique (x1), la génération (154) d'une pluralité (PLUR-x) d'images numériques avec les différents styles en utilisant le générateur (14) sur la base de la prédiction de bruit (PRED-NOISE-x1) associée à la première image numérique (x1) et les différents ensembles (SET-LAT-VAR) de variables latentes caractérisant différents styles.

10. Procédé selon au moins l'une des revendications précédentes, comprenant : la fourniture (160) de données d'image (IMG-DAT-DOM-1), comprenant par exemple une ou plusieurs images numériques, associées à un premier domaine (DOM-1), la fourniture (162) de données d'image (IMG-DAT-DOM-2), comprenant par exemple une ou plusieurs images numériques, associées à un deuxième domaine (DOM-2), l'application (164) d'un style (STYLE-2) du deuxième domaine (DOM-2) aux données d'image (IMD-DAT-DOM-1) associées au premier domaine (DOM-1).

11. Procédé selon la revendication 10, dans lequel les données d'image (IMG-DAT-DOM-1) associées au premier domaine (DOM-1) comprennent des étiquettes (LAB), où, par exemple, l'application (164) du style (STYLE-2) du deuxième domaine (DOM-2) aux données d'image (IMD-DAT-DOM-1) associées au premier domaine (DOM-1) comprend la conservation (164a) des étiquettes (LAB).

12. Procédé selon au moins l'une des revendications précédentes, comprenant : la fourniture (170) de premières données d'image (IMG-DAT-1) ayant des premières informations de contenu (I-CONT-1), la fourniture (172) de deuxièmes données d'image (IMG-DAT-2), où, par exemple, les deuxièmes données d'image (IMG-DAT-2) comprennent des deuxièmes informations de contenu (I-CONT-2) différentes des premières informations de contenu (I-CONT-1), l'extraction (174) d'informations de style (I-STYLE-2) des deuxièmes données d'image (IMG-DAT-2), l'application (176) d'au moins une partie des informations de style (I-STYLE-2) des deuxièmes données d'image (IMG-DAT-2) aux premières données d'image (IMG-DAT-1).

13. Procédé selon au moins l'une des revendications précédentes, comprenant : la génération (180) de données d'entraînement (TRAIN-DAT), par exemple pour l'entraînement d'au moins un système de réseau neuronal (NNS), la génération (180) étant basée par exemple sur des données d'image (IMG-DAT-SRC) d'un domaine source et basée sur des données d'image modifiées (IMG-DAT-SRC') du domaine source, où, par exemple, les données d'image modifiées (IMG-DAT-SRC) sont et/ou ont été modifiées par rapport à un style d'image, par exemple sur la base d'un style d'autres données d'image (IMG-DAT'), et, éventuellement, l'entraînement (182) de l'au moins un système de réseau neuronal (NNS) sur la base de données d'entraînement (TRAIN-DAT).

14. Appareil (200) pour l'exécution du procédé selon au moins l'une des revendications précédentes.

15. Programme informatique (PRG ; PRG') comprenant des instructions qui, lorsque le programme (PRG ; PRG') est exécuté par un ordinateur (202), amènent l'ordinateur (202) à accomplir les étapes du procédé selon au moins l'une des revendications 1 à 13.

16. Support de stockage lisible par ordinateur (SM) comprenant des instructions (PRG') qui, lorsqu'elles sont exécutées par un ordinateur (202), amènent l'ordinateur (202) à exécuter le procédé selon au moins l'une des revendications 1 à 13.

17. Signal porteur de données (DCS) transportant et/ou caractérisant le programme informatique (PRG ; PRG') de la revendication 15.

18. Utilisation (300) du procédé selon au moins l'une des revendications 1 à 13 et/ou de l'appareil (200) selon la revendication 14 et/ou du programme informatique (PRG ; PRG ;) selon la revendication 15 et/ou du support de stockage lisible par ordinateur (SM) selon la revendication 16 et/ou du signal porteur de données (DCS) selon la revendication 17 pour au moins l'une des opérations de : a) détermination (301) d'au moins une autre image numérique (x') sur la base de la prédiction de bruit (PRED-NOISE-x1) associée à la première image numérique (x1) et d'une pluralité (LAT-VAR) de variables latentes associées à l'espace latent étendu (SP-W+), au moins certaines variables de la pluralité (LAT-VAR) de variables latentes étant associées à une autre image et/ou à d'autres données que la première image numérique (x1), b) transfert (302) d'un style d'une deuxième image numérique à la première image numérique, tout en conservant par exemple un contenu de la première image numérique, c) désentrelacement (303) du style et du contenu d'au moins une image numérique, d) création (304) de différentes images numériques stylisées avec un contenu inchangé, par exemple sur la base de la première image numérique et d'un style d'au moins une autre, par exemple une deuxième, image numérique, e) utilisation (305), par exemple réutilisation, d'annotations étiquetées pour des images stylisées, f) omission (306) du travail d'annotation lors d'un changement de style d'au moins une image numérique, g) génération (307) d'images numériques, par exemple perceptuellement réalistes, par exemple avec des styles différents, h) fourniture (308) d'un ou plusieurs ensembles de validation mandataires, par exemple pour tester une généralisation hors distribution, par exemple d'un système de réseau neuronal, i) entraînement (309) d'un système d'apprentissage automatique, j) test (310) d'un système d'apprentissage automatique, k) vérification (311) d'un système d'apprentissage automatique, l) validation (312) d'un système d'apprentissage automatique, m) génération (313) de données d'entraînement, par exemple pour un système d'apprentissage automatique, n) augmentation de données (314), par exemple de données d'image existantes, o) amélioration (315) d'une performance de généralisation d'un système d'apprentissage automatique, p) manipulation (316), par exemple de manière flexible, des styles d'image, par exemple sans entraînement associé à de multiples ensembles de données, q) utilisation (317) d'un pipeline d'encodeur GAN pipeline pour manipuler les styles d'image, r) intégration (318), par l'encodeur (12), d'information associées à un style d'image dans des variables latentes, par exemple intermédiaires, s) mélange (319) de styles d'images numériques, par exemple pour la génération d'au moins une autre image numérique comprenant un style basé sur le mélange (319).

100 ⟋ [                    ] ← x1

↓ PRED-NOISE-x1

102 ⟋ [                    ] ← LAT-VAR

↓ x'

# Fig. 1

10 ⤸

12 ⟋ [        ]

LAT-VAR,
PRED-NOISE-x1 ⟹

SP-W+

14 ⟋ [        ] ⇠ LAT-VAR  DISTR

x1,x2 ↑

↓ x'

16 ⟋ [        ]

# Fig. 2

110 ⟋ [                    ]

↓ LAT-VAR

112 ⟋ [                    ]

↓ x'

# Fig. 3

120 ⌐‿

FM

122 ⌐‿

LAT-VAR-x1

124 ⌐‿

NOISE-MAP

# Fig. 4

12a

14a

E1

x1

E2-1

$w^1$

E4-1

E2-n

$w^k$

E4-k

E3

$\varepsilon$

M

$\varepsilon m$

❄

# Fig. 5

E10

E11

E12

E13

Fig. 6A

$\varepsilon$

M

$\varepsilon_m$

Fig. 6B

130

PRED-NOISE-M

132

NOISE-MAP-M

Fig. 7

132a

PATCH

132b

PATCH-SUB

132c

PATCH-RND

Fig. 8

140

142

PRED-NOISE-x1,
PRED-STYLE-x2

x1,2

**Fig. 9**

150

152

154

PRED-NOISE-x1

SET-LAT-VAR

PLUR-x

**Fig. 10**

12b-1

$x_1$

E21

E22

E23

$\varepsilon_1$

14b

12b-2

$x_2$

E21

E22

E23

$w_2$

$x_{mix}$

**Fig. 11**

DISTR

$w^1$

$w^2$

$w^k$

14b

12b

E22

E21

E23

$\varepsilon$

x

$x_{sampled}$

# Fig. 12

160

IMG-DAT-DOM-1

162

IMG-DAT-DOM-2

164

164a

x-CONT-1-STYLE-2, LAB

# Fig. 13

Fig. 14

Fig. 15

Fig. 16

Fig. 17A

SD | TD

BR1

BR2

SD

Fig. 17B

EP 4 358 015 B1

Fig. 18

200

202

204

204a — 204b

DAT  PRG

206 — DCS

SM

PRG'

**Fig. 19**

300

301  302  303  304  305

306  307  308  309  310

311  312  313  314  315

316  317  318  319

**Fig. 20**

## REFERENCES CITED IN THE DESCRIPTION

### Patent documents cited in the description

- US 2022277431 A1, Tensmeyer

### Non-patent literature cited in the description

- Image2StyleGAN: How to Embed Images Into the StyleGAN Latent Space. **ABADAL RAMEEN et al.** 2019 IEEE/CVF International Conference on Computer Vision (ICCV). IEEE, 27 October 2019, 4431-4440
- Improving Inversion and Generation Diversity in StyleGAN using a Gaussianized Latent Space. **JONAS WULFF et al.** ARXIV.ORG. Cornell University Library, 14 September 2020
- Diffusion Autoencoders: Toward a Meaningful and Decodable Representation. **KONPAT PREECHA-KUL et al.** ARXIV.ORG. Cornell University Library, 30 November 2021
- Radar HRRP Data Augmentation Using CVAE with Extended Latent Space Distribution. **ZHANG WEN-XIANG et al.** 2021 IEEE 4th Advanced Information Management, Communicates, Electronic and Automation Control Conference (IMCEC). IEEE, 18 June 2021, vol. 4, 1346-1354
- *arXiv:1801.03924v2 [cs.CV]*, 10 April 2018

- Feature Pyramid Networks for Object Detection. *arXiv:1612.03144v2 [cs.CV*, 19 April 2017
- *arXiv: 2008.00951v2 [cs.CV*, 21 April 2021
- **TERO KARRAS** ; **SAMULI LAINE** ; **MIIKA AITTALA** ; **JANNE HELLSTEN** ; **JAAKKO LEHTINEN** ; **TIMO AILA**. Analyzing and improving the image quality of stylegan. *CVPR*, 2020
- *arXiv:1912.04958v2*
- **RICHARD ZHANG** ; **PHILLIP ISOLA** ; **ALEXEI A EFROS** ; **ELI SHECHTMAN** ; **OLIVER WANG**. The unreasonable effectiveness of deep features as a perceptual metric. *CVPR*, 2018
- **GOODFELLOW, JEAN POUGET-ABADIE** ; **MEHDI MIRZA** ; **BING XU** ; **DAVIDWARDE-FARLEY** ; **SHERJIL OZAIR** ; **ARON COURVILLE** ; **YOSHUA BENGIO**. Generative adversarial nets. *In NeurIPS*, 2014
- **XU YAO** ; **ALASDAIR NEWSON** ; **YANN GOUS-SEAU** ; **PIERRE HELLIER**. Feature-Style Encoder for Style-Based GAN Inversion. *arXiv preprint*, 2022